# EUROPEAN PATENT APPLICATION

(11) **EP 4 676 138 A1**
(43) Date of publication of application: **07.01.2026**
(21) Application number: 24777847.5
(22) Date of filing: 21.03.2024
(51) Int. Cl.: H04W 72/04

(54) **MULTI-LINK COMMUNICATION METHOD, COMMUNICATION APPARATUS, AND COMMUNICATION SYSTEM**

(30) Priority: 24.03.2023 CN 202310305592
(71) Applicant: HUAWEI TECHNOLOGIES CO., LTD., Shenzhen, Guangdong 518129 (CN)
(72) Inventor: HUANG, Guogang, Shenzhen, Guangdong 518129 (CN); LI, Yunbo, Shenzhen, Guangdong 518129 (CN); GUO, Yuchen, Shenzhen, Guangdong 518129 (CN); GAN, Ming, Shenzhen, Guangdong 518129 (CN); MCCANN, Stephen, Shenzhen, Guangdong 518129 (CN); MONTEMURRO, Michael, Shenzhen, Guangdong 518129 (CN)
(74) Representative: Goddar, Heinz J.
(86) International application number: PCT/CN2024/082851
(87) International publication number: WO 2024/199058

(57) **Abstract**

A multi-link communication method, a communication apparatus, and a communication system are provided, and are applied to a wireless local area network system that supports the 802.11 series protocols, for example, a next-generation Wi-Fi protocol of IEEE 802.11ax, such as 802.11be, Wi-Fi 7, or EHT, for another example, a next-generation of 802.11be, such as Wi-Fi 8, UHR, or Wi-Fi AI; and may also be applied to a wireless personal area network system based on ultra-wideband UWB or a sensing sensing system. The method includes: An AP sends a first communication frame, and correspondingly a STA receives the first communication frame, where the first communication frame includes identification information of a first access point multi-link device AP MLD and first indication information, and the first indication information indicates a termination time of the first AP MLD. This can implement termination of the first AP MLD.

## Description

This application claims priority to Chinese Patent Application No. 202310305592.7, filed with the China National Intellectual Property Administration on March 24, 2023, and entitled "MULTI-LINK COMMUNICATION METHOD, COMMUNICATION APPARATUS, AND COMMUNICATION SYSTEM", which is incorporated herein by reference in its entirety.

### TECHNICAL FIELD

This application relates to the field of communication technologies, and in particular, to a multi-link communication method, a communication apparatus, and a communication system.

### BACKGROUND

A multi-link device (multi-link device, MLD) is a device having a plurality of stations simultaneously operating on different frequency bands or channels respectively. By performing a multi-link establishment operation on one link (link), a non-access point (access point, AP) multi-link device (non-AP MLD) may implement association with an AP multi-link device (AP MLD) and simultaneously establish a plurality of links.

For example, the AP MLD may include a collocated AP MLD and a non-collocated AP MLD. The collocated AP MLD may be understood as that a MAC layer and a PHY layer of the AP MLD are located in a same physical device. The non-collocated AP MLD may be understood as that upper (Upper) medium access control (medium access control, MAC), lower (Lower) MAC, and a physical layer (physical layer, PHY) of the AP MLD are not located in a same physical device, and the upper MAC and the lower MAC of the AP MLD are connected through a wired or wireless interface.

In some scenarios (such as software upgrade and maintenance, and device failure), the collocated AP MLD or the non-collocated AP MLD needs to be terminated. Therefore, how to terminate the collocated AP MLD or the non-collocated AP MLD is a problem that needs to be urgently resolved.

### SUMMARY

Embodiments of this application disclose a multi-link communication method, a communication apparatus, and a communication system, to implement termination of a collocated AP MLD or a non-collocated AP MLD, so that a non-AP MLD associated with the collocated AP MLD or the non-collocated AP MLD performs basic service set (basic service set, BSS) transition in time.

According to a first aspect, an embodiment of this application provides a multi-link communication method. The method is applied to a first communication apparatus. The method includes:
determining a first communication frame, where the first communication frame includes identification information of a first access point multi-link device AP MLD and first indication information, and the first indication information indicates a termination time of the first AP MLD; and sending the first communication frame.

In this embodiment of this application, the first communication apparatus may be an AP, the AP is affiliated with the first AP MLD, and the AP may be referred to as an affiliated AP. The first AP MLD may be a collocated AP MLD or a non-collocated AP MLD. The first communication frame may be a beacon frame, and when the first AP MLD needs to be terminated, the first communication frame may be sent by using an affiliated AP, to indicate that the first AP MLD is to be terminated and indicate the termination time of the first AP MLD, so that a non-AP MLD associated with the first AP MLD can perform BSS transition in time, and the first AP MLD is allowed to be terminated or removed, thereby implementing termination of the first AP MLD.

According to a second aspect, an embodiment of this application provides a multi-link communication method. The method is applied to a second communication apparatus. The method includes:
receiving a first communication frame, where the first communication frame includes identification information of a first access point multi-link device AP MLD and first indication information, and the first indication information indicates a termination time of the first AP MLD; and parsing the first communication frame.

In this embodiment of this application, the second communication apparatus may be a STA, and the STA is affiliated with a non-AP MLD. The first AP MLD may be a collocated AP MLD or a non-collocated AP MLD. When the first AP MLD needs to be terminated, the first communication frame may be sent by using an affiliated AP, to indicate that the first AP MLD is to be terminated and indicate the termination time of the first AP MLD, so that a non-AP MLD associated with the first AP MLD can perform BSS transition in time, and the first AP MLD is allowed to be terminated or removed, thereby implementing termination of the first AP MLD.

With reference to the first aspect or the second aspect, in a possible implementation, the first communication frame further includes sixth indication information, and the sixth indication information indicates a candidate neighboring node that performs BSS transition.

In this embodiment of this application, the sixth indication information may include information about a neighboring AP MLD of the first AP MLD or a neighboring AP of an affiliated AP of the first AP MLD. When the first AP MLD needs to be terminated, the first communication frame may be sent by using the affiliated AP of the first AP MLD, to indicate the termination time of the first AP MLD and the candidate neighboring node that performs BSS transition, so that the non-AP MLD associated with the first AP MLD performs BSS transition. It should be noted that first communication frames sent by all affiliated APs of the first AP MLD may carry sixth indication information that is not completely the same.

With reference to the first aspect or the second aspect, in a possible implementation, the first AP MLD is a non-collocated AP MLD.

In this embodiment of this application, the first AP MLD is a non-collocated AP MLD, that is, the first indication information in the first communication frame indicates a termination time of the non-collocated AP MLD, thereby implementing termination of the non-collocated AP MLD.

With reference to the first aspect or the second aspect, in a possible implementation, the first AP MLD is a collocated AP MLD, and the first communication frame further includes identification information of a non-collocated AP MLD with which the collocated AP MLD is affiliated.

In this embodiment of this application, the first AP MLD is a collocated AP MLD, that is, the first indication information in the first communication frame indicates a termination time of the collocated AP MLD, thereby implementing termination of the collocated AP MLD. The identification information of the non-collocated AP MLD may include a MAC address of the non-collocated AP MLD, and the first communication frame carries the identification information of the non-collocated AP MLD, to indicate whether the collocated AP MLD is affiliated with a non-collocated AP MLD, so that a non-AP MLD that receives the first communication frame determines the non-collocated AP MLD with which the collocated AP MLD is affiliated, and the non-AP MLD can be transited to another collocated AP MLD in the non-collocated AP MLD.

With reference to the first aspect or the second aspect, in a possible implementation, the first indication information includes first duration, and the first duration indicates that the first AP MLD is terminated after the first duration.

In this embodiment of this application, a unit of the first duration may be a time unit (time unit, TU), that is, the first indication information indicates a quantity of time units after which the first AP MLD is terminated.

With reference to the first aspect or the second aspect, in a possible implementation, the identification information of the first AP MLD and the first indication information are included in a reconfiguration multi-link element of the first communication frame.

In this embodiment of this application, the first communication frame may be a beacon frame, the beacon frame carries a reconfiguration multi-link element, and the identification information of the first AP MLD and the first indication information are included in the reconfiguration multi-link element. When the first AP MLD is a non-collocated AP MLD, the non-collocated AP MLD includes the reconfiguration multi-link element in a beacon frame sent on a link on which each affiliated AP of each collocated AP MLD affiliated with the non-collocated AP MLD is located, to indicate that the non-collocated AP MLD is to be terminated. When the first AP MLD is a collocated AP MLD, the collocated AP MLD includes the reconfiguration multi-link element in a beacon frame sent on a link on which each affiliated AP of the collocated AP MLD is located, to indicate that the collocated AP MLD is to be terminated.

With reference to the first aspect or the second aspect, in a possible implementation, the first communication frame further includes at least one of the following: indication information indicating a termination reason of the first AP MLD, and one or more neighbor report elements, where the one or more neighbor report elements include information about a neighboring access point AP of an AP affiliated with the first AP MLD.

In this embodiment of this application, the first communication frame may be a function frame that is defined to indicate that the first AP MLD is terminated. For example, the first communication frame may be an AP MLD termination announcement (AP MLD termination announcement) frame. The communication frame may include a reason code and the one or more neighbor report elements, and the reason code indicates the termination reason of the first AP MLD. When the first AP MLD needs to be terminated, the first AP MLD may include the reason code and the one or more neighbor report elements in the first communication frame sent by the affiliated AP, to indicate the non-AP MLD associated with the first AP MLD to perform BSS transition based on the one or more neighbor report elements. It may be understood that neighbor report elements carried in the first communication frames sent by all the affiliated APs of the first AP MLD may not be completely the same.

According to a third aspect, an embodiment of this application provides a multi-link communication method. The method is applied to a first non-collocated AP MLD. The method includes:

The first non-collocated AP MLD generates a BSS transition management (BSS transition management, BTM) request frame, where the BTM request frame includes identification information of a second non-collocated AP MLD; and the first non-collocated AP MLD sends the BTM request frame by using an affiliated AP.

In this embodiment of this application, when the first non-collocated AP MLD needs to be terminated, the first non-collocated AP MLD may include the identification information of the second non-collocated AP MLD in the generated BTM request frame, to indicate that a non-AP MLD associated with the first non-collocated AP MLD can be transited to the second non-collocated AP MLD, so that the first non-collocated AP MLD is allowed to be terminated or removed. It may be understood that the BTM request frame may be generated by the first non-collocated AP MLD, or the BTM request frame may be generated by a collocated AP MLD affiliated with the first non-collocated AP MLD, or the BTM request frame may be generated by an affiliated AP of the first non-collocated AP MLD. This is not limited in this application.

According to a fourth aspect, an embodiment of this application provides a multi-link communication method. The method is applied to a non-AP MLD. The method includes:
receiving a BTM request frame from an affiliated AP, where the affiliated AP is affiliated with a first non-collocated AP MLD, and the BTM request frame includes an identifier of a second non-collocated AP MLD; and parsing the BTM request frame.

In this embodiment of this application, when the first non-collocated AP MLD needs to be terminated, the first non-collocated AP MLD may include the identification information of the second non-collocated AP MLD in the generated BTM request frame, to indicate that a non-AP MLD associated with the first non-collocated AP MLD can be transited to the second non-collocated AP MLD, so that the first non-collocated AP MLD is allowed to be terminated or removed.

With reference to the third aspect or the fourth aspect, in a possible implementation, an address information field of the BTM request frame includes identification information of the first non-collocated AP MLD.

In this embodiment of this application, the address information field of the BTM request frame may include an address 1 field, an address2 field, and an address3 field, where the address 1 of the BTM request frame may be set to a broadcast address, and the address3 of the BTM frame may be set to a MAC address of the first non-collocated AP MLD. For the non-AP MLD (for example, a UHR non-AP MLD) associated with the first non-collocated AP MLD, after receiving the BTM request frame, the UHR non-AP MLD performs BSS transition based on the BTM request frame. For a pre-EHT STA and an EHT non-AP MLD, because the address3 of the BTM frame is not an identifier of a corresponding BSS, the pre-EHT STA and the EHT non-AP MLD discard the BTM request frame after receiving the broadcast BTM request frame. The first non-collocated AP MLD includes the identification information of the first non-collocated AP MLD in the address3 of the BTM request frame, to indicate the UHR non-AP MLD associated with the first non-collocated AP MLD to perform BSS transition.

With reference to the third aspect or the fourth aspect, in a possible implementation, the BTM request frame further includes at least one of the following: BSS termination included information, link removal information, and link transition information, where the BSS termination included information indicates whether a BSS associated with the first non-collocated AP MLD is terminated, the link removal information indicates whether to remove a link associated with the first non-collocated AP MLD, and the link transition information indicates whether to perform transition between different collocated AP MLDs affiliated with the first non-collocated AP MLD.

With reference to the third aspect, in a possible implementation, the method further includes:
sending a second communication frame, where the second communication frame includes a reduced neighbor report (reduced neighbor report, RNR) element, and the reduced neighbor report element includes information about at least one affiliated AP of a collocated AP MLD affiliated with the first non-collocated AP MLD.

In this embodiment of this application, the second communication frame may be a beacon frame or a newly defined broadcast frame used to broadcast an RNR. The first non-collocated AP MLD may include the information about the at least one affiliated AP of the collocated AP MLD of the first non-collocated AP MLD in the second communication frame that is broadcast by the affiliated AP of the first non-co-located AP MLD, so that the non-AP MLD associated with the first non-collocated AP MLD can obtain information about a neighboring collocated AP MLD without performing channel scanning.

With reference to the fourth aspect, in a possible implementation, the method further includes:
receiving a second communication frame, where the second communication frame includes a reduced neighbor report element, and the reduced neighbor report element includes information about at least one affiliated AP of a collocated AP MLD affiliated with the first non-collocated AP MLD.

In this embodiment of this application, the second communication frame may be a beacon frame or a newly defined broadcast frame used to broadcast an RNR. The first non-collocated AP MLD may include the information about the at least one affiliated AP of the collocated AP MLD of the first non-collocated AP MLD in the second communication frame that is broadcast by the affiliated AP of the first non-co-located AP MLD, so that the non-AP MLD associated with the first non-collocated AP MLD can obtain information about a neighboring collocated AP MLD without performing channel scanning.

According to a fifth aspect, an embodiment of this application provides a multi-link communication method. The method is applied to a first communication apparatus. The method includes:
receiving a probe request frame, where the probe request frame includes identification information of a first collocated AP MLD and second indication information, the first collocated AP MLD is affiliated with a third non-collocated AP MLD, and the second indication information indicates to probe the first collocated AP MLD, or the second indication information indicates to probe a collocated AP MLD that is affiliated with the third non-collocated AP MLD and that is adjacent to the first collocated AP MLD, or the second indication information indicates to probe the first collocated AP MLD and a collocated AP MLD that is affiliated with the third non-collocated AP MLD and that is adjacent to the first collocated AP MLD, or the second indication information indicates to probe a collocated AP MLD affiliated with the third non-collocated AP MLD; and sending a probe response frame.

In this embodiment of this application, the first communication apparatus may be an AP, and the AP is affiliated with the first collocated AP MLD or the AP is affiliated with a collocated AP MLD of the third non-collocated AP MLD. After receiving the probe request frame, the third non-collocated AP MLD may reply with the probe response frame by using an affiliated AP. A non-AP MLD includes, in the probe request frame sent by a STA, the second indication information indicating a probe scope of the probe request frame, so that the non-AP MLD can probe, by using the second indication information, information about a collocated AP MLD adjacent to the first collocated AP MLD.

According to a sixth aspect, an embodiment of this application provides a multi-link communication method. The method is applied to a second communication apparatus. The method includes:
sending a probe request frame, where the probe request frame includes identification information of a first collocated AP MLD and second indication information, the first AP MLD is affiliated with a third non-collocated AP MLD, and the second indication information indicates to probe the first collocated AP MLD, or the second indication information indicates to probe a collocated AP MLD that is affiliated with the third non-collocated AP MLD and that is adjacent to the first collocated AP MLD, or the second indication information indicates to probe the first collocated AP MLD and a collocated AP MLD that is affiliated with the third non-collocated AP MLD and that is adjacent to the first collocated AP MLD, or the second indication information indicates to probe a collocated AP MLD affiliated with the third non-collocated AP MLD; and receiving a probe response frame.

In this embodiment of this application, the second communication apparatus may be a STA, and the STA is affiliated with a non-AP MLD. The non-AP MLD includes, in the probe request frame sent by the STA, the second indication information indicating a probe scope of the probe request frame, so that the non-AP MLD can probe, by using the second indication information, information about a collocated AP MLD adjacent to the first collocated AP MLD.

With reference to the fifth aspect or the sixth aspect, in a possible implementation, when the second indication information indicates to probe a collocated AP MLD affiliated with the third non-collocated AP MLD, the probe response frame includes third indication information, and the third indication information indicates a quantity of collocated AP MLDs affiliated with the third non-collocated AP MLD.

In this embodiment of this application, when the third non-collocated AP MLD includes many affiliated collocated AP MLDs, if the probe response frame includes information about all collocated AP MLDs affiliated with the third non-collocated AP MLD, signaling overheads are high. In this case, the probe response frame may include statistics information about the third non-collocated AP MLD, and does not need to carry the information about all the collocated AP MLDs affiliated with the third non-collocated AP MLD, so that signaling overheads can be reduced. For example, the probe response frame may include the quantity of collocated AP MLDs affiliated with the third non-collocated AP MLD.

With reference to the fifth aspect or the sixth aspect, in a possible implementation, the probe request frame further includes identification information of the third non-collocated AP MLD.

With reference to the fifth aspect or the sixth aspect, in a possible implementation, the probe request frame further includes a service set identifier SSID.

According to a seventh aspect, an embodiment of this application provides a multi-link communication method. The method is applied to a first communication apparatus. The method includes:
determining a third communication frame, where the third communication frame includes fourth indication information, and the fourth indication information indicates a second collocated AP MLD to be removed from a fourth non-collocated AP MLD, or the fourth indication information indicates a second collocated AP MLD to be transited from a fourth non-collocated AP MLD to a fifth non-collocated AP MLD; and sending the third communication frame.

In this embodiment of this application, the first communication apparatus may be an AP, the AP is affiliated with the second collocated AP MLD, and the second collocated AP MLD is affiliated with the fourth non-collocated AP MLD. The fifth non-collocated AP MLD and the fourth non-collocated AP MLD are two different non-collocated AP MLDs. For example, the fifth non-collocated AP MLD may be a neighboring non-collocated AP MLD of the fourth AP MLD. The third communication frame may be a beacon frame, and the third communication frame may be generated by the AP, or may be generated by the second collocated AP MLD. When the second collocated AP MLD needs to be removed from the fourth non-collocated AP MLD, or the second collocated AP MLD needs to be transited from the fourth non-collocated AP MLD to the fifth non-collocated AP MLD, the second collocated AP MLD may include the fourth indication information in the communication frame sent by using an affiliated AP, to use the fourth indication information to indicate the second collocated AP MLD to be removed from the fourth non-collocated AP MLD or indicate the second collocated AP MLD to be transited from the fourth non-collocated AP MLD to the fifth non-collocated AP MLD, so that a non-AP MLD associated with the second collocated AP MLD or the fourth non-collocated AP MLD can perform BSS transition or link transition in time.

According to an eighth aspect, an embodiment of this application provides a multi-link communication method. The method is applied to a second communication apparatus. The method includes:
receiving a third communication frame, where the third communication frame includes fourth indication information, and the fourth indication information indicates a second collocated AP MLD to be removed from a fourth non-collocated AP MLD, or the fourth indication information indicates a second collocated AP MLD to be transited from a fourth non-collocated AP MLD to a fifth non-collocated AP MLD; and parsing the third communication frame.

In this embodiment of this application, the second communication apparatus may be a STA, and the STA is affiliated with a non-AP MLD. The second collocated AP MLD is affiliated with the fourth non-collocated AP MLD. The fifth non-collocated AP MLD and the fourth non-collocated AP MLD are two different non-collocated AP MLDs. For example, the fifth non-collocated AP MLD may be a neighboring non-collocated AP MLD of the fourth AP MLD. The third communication frame may be a beacon frame, and the third communication frame may be generated by the AP, or may be generated by the second collocated AP MLD. When the second collocated AP MLD needs to be removed from the fourth non-collocated AP MLD, or the second collocated AP MLD needs to be transited from the fourth non-collocated AP MLD to the fifth non-collocated AP MLD, the second collocated AP MLD may include the fourth indication information in the third communication frame sent by using an affiliated AP, to use the fourth indication information to indicate the second collocated AP MLD to be removed from the fourth non-collocated AP MLD or indicate the second collocated AP MLD to be transited from the fourth non-collocated AP MLD to the fifth non-collocated AP MLD, so that a non-AP MLD associated with the second collocated AP MLD or the fourth non-collocated AP MLD can perform BSS transition or link transition in time.

With reference to the seventh aspect or the eighth aspect, in a possible implementation, the third communication frame further includes fifth indication information, and the fifth indication information indicates a time of removing the second collocated AP MLD from the fourth non-collocated AP MLD, or the fifth indication information indicates a time of transiting the second collocated AP MLD from the fourth non-collocated AP MLD to the fifth non-collocated AP MLD.

In this embodiment of this application, the second collocated AP MLD may include the fifth indication information in the third communication frame, to indicate the time of removing the second collocated AP MLD from the fourth non-collocated AP MLD or indicate the time of transiting the second collocated AP MLD from the fourth non-collocated AP MLD to the fifth non-collocated AP MLD, so that the non-AP MLD associated with the second collocated AP MLD or the fourth non-collocated AP MLD can perform BSS transition or link transition in time.

With reference to the seventh aspect or the eighth aspect, in a possible implementation, the fifth indication information includes second duration, and the second duration indicates that the second collocated AP MLD is removed from the fourth non-collocated AP MLD after the second duration, or the second duration indicates that the second collocated AP MLD is transited from the fourth non-collocated AP MLD to the fifth non-collocated AP MLD after the second duration.

With reference to the seventh aspect or the eighth aspect, in a possible implementation, the third communication frame further includes identification information of the second collocated AP MLD and identification information of the fourth non-collocated AP MLD.

According to a ninth aspect, an embodiment of this application provides a multi-link communication method. The method is applied to a first communication apparatus. The method includes:
determining a second communication frame, where the second communication frame includes a reduced neighbor report element, and the reduced neighbor report element includes information about at least one affiliated AP of a collocated AP MLD affiliated with a non-collocated AP MLD; and sending the second communication frame.

In this embodiment of this application, the first communication apparatus may be an AP, the AP is affiliated with a collocated AP MLD, and the collocated AP MLD is affiliated with a non-collocated AP MLD. The collocated AP MLD includes, in the second communication frame that is broadcast by the affiliated AP, information about a collocated AP MLD that is adjacent to the collocated AP MLD and that is affiliated with the same non-collocated AP MLD, so that a non-AP MLD can obtain the information about the neighboring collocated AP MLD without performing channel scanning.

According to a tenth aspect, an embodiment of this application provides a multi-link communication method. The method is applied to a second communication apparatus. The method includes:
receiving a second communication frame, where the second communication frame includes a reduced neighbor report element, and the reduced neighbor report element includes information about at least one affiliated AP of a collocated AP MLD affiliated with a non-collocated AP MLD; and parsing the second communication frame.

In this embodiment of this application, the second communication apparatus may be a STA, and the STA is affiliated with a non-AP MLD. The collocated AP MLD includes, in the second communication frame that is broadcast by the affiliated AP, information about a collocated AP MLD that is adjacent to the collocated AP MLD and that is affiliated with the same non-collocated AP MLD, so that a non-AP MLD can obtain the information about the neighboring collocated AP MLD without performing channel scanning.

According to an eleventh aspect, an embodiment of this application provides a communication apparatus, configured to perform the method according to the first aspect or any possible implementation of the first aspect. The communication apparatus includes a unit for performing the method according to the first aspect or any possible implementation of the first aspect.

According to a twelfth aspect, an embodiment of this application provides a communication apparatus, configured to perform the method according to the second aspect or any possible implementation of the second aspect. The communication apparatus includes a unit for performing the method according to the second aspect or any possible implementation of the second aspect.

According to a thirteenth aspect, an embodiment of this application provides a communication apparatus, configured to perform the method according to the third aspect or any possible implementation of the third aspect. The communication apparatus includes a unit for performing the method according to the third aspect or any possible implementation of the third aspect.

According to a fourteenth aspect, an embodiment of this application provides a communication apparatus, configured to perform the method according to the fourth aspect or any possible implementation of the fourth aspect. The communication apparatus includes a unit for performing the method according to the fourth aspect or any possible implementation of the fourth aspect.

According to a fifteenth aspect, an embodiment of this application provides a communication apparatus, configured to perform the method according to the fifth aspect or any possible implementation of the fifth aspect. The communication apparatus includes a unit for performing the method according to the fifth aspect or any possible implementation of the fifth aspect.

According to a sixteenth aspect, an embodiment of this application provides a communication apparatus, configured to perform the method according to the sixth aspect or any possible implementation of the sixth aspect. The communication apparatus includes a unit for performing the method according to the sixth aspect or any possible implementation of the sixth aspect.

According to a seventeenth aspect, an embodiment of this application provides a communication apparatus, configured to perform the method according to the seventh aspect or any possible implementation of the seventh aspect. The communication apparatus includes a unit for performing the method according to the seventh aspect or any possible implementation of the seventh aspect.

According to an eighteenth aspect, an embodiment of this application provides a communication apparatus, configured to perform the method according to the eighth aspect or any possible implementation of the eighth aspect. The communication apparatus includes a unit for performing the method according to the eighth aspect or any possible implementation of the eighth aspect.

According to a nineteenth aspect, an embodiment of this application provides a communication apparatus, configured to perform the method according to the ninth aspect or any possible implementation of the ninth aspect. The communication apparatus includes a unit for performing the method according to the ninth aspect or any possible implementation of the ninth aspect.

According to a twentieth aspect, an embodiment of this application provides a communication apparatus, configured to perform the method according to the tenth aspect or any possible implementation of the tenth aspect. The communication apparatus includes a unit for performing the method according to the tenth aspect or any possible implementation of the tenth aspect.

In the eleventh aspect to the twentieth aspect, the communication apparatus may include a transceiver unit and a processing unit. For specific descriptions of the transceiver unit and the processing unit, refer to apparatus embodiments provided below.

According to a twenty-first aspect, an embodiment of this application provides a communication apparatus. The communication apparatus includes a processor, configured to perform the method according to any one of the first aspect to the tenth aspect or any possible implementation. Alternatively, the processor is configured to execute a program stored in a memory. When the program is executed, the method according to any one of the first aspect to the tenth aspect or any possible implementation is performed.

In a possible implementation, the memory is located outside the communication apparatus.

In a possible implementation, the memory is located inside the communication apparatus.

In this embodiment of this application, the processor and the memory may alternatively be integrated into one device, that is, the processor and the memory may alternatively be integrated together.

In a possible implementation, the communication apparatus further includes a transceiver, and the transceiver is configured to receive a signal or send a signal.

According to a twenty-second aspect, an embodiment of this application provides a communication apparatus. The communication apparatus includes a logic circuit and an interface, the logic circuit is coupled to the interface, the logic circuit is configured to determine a first communication frame, and the interface is configured to output the first communication frame.

It may be understood that, for the communication apparatus according to the twenty-second aspect, refer to the first aspect or the following specific implementations.

According to a twenty-third aspect, an embodiment of this application provides a communication apparatus. The communication apparatus includes a logic circuit and an interface, the logic circuit is coupled to the interface, the interface is configured to input a first communication frame, and the logic circuit is configured to parse the first communication frame.

It may be understood that, for the communication apparatus according to the twenty-third aspect, refer to the second aspect or the following specific implementations.

According to a twenty-fourth aspect, an embodiment of this application provides a communication apparatus. The communication apparatus includes a logic circuit and an interface, the logic circuit is coupled to the interface, the logic circuit is configured to generate a BTM request frame, and the interface is configured to output the BTM request frame.

According to a twenty-fifth aspect, an embodiment of this application provides a communication apparatus. The communication apparatus includes a logic circuit and an interface, the logic circuit is coupled to the interface, the interface is configured to input a BTM request frame, and the logic circuit is configured to parse the BTM request frame.

It may be understood that, for the communication apparatuses according to the twenty-fourth aspect and the twenty-fifth aspect, refer to the third aspect, the fourth aspect, or the following specific implementations.

According to a twenty-sixth aspect, an embodiment of this application provides a communication apparatus. The communication apparatus includes a logic circuit and an interface, the logic circuit is coupled to the interface, and the interface is configured to input a probe request frame and output a probe response frame.

According to a twenty-seventh aspect, an embodiment of this application provides a communication apparatus. The communication apparatus includes a logic circuit and an interface, the logic circuit is coupled to the interface, and the interface is configured to output a probe request frame and input a probe response frame.

It may be understood that, for the communication apparatuses according to the twenty-sixth aspect and the twenty-seventh aspect, refer to the fifth aspect, the sixth aspect, or the following specific implementations.

According to a twenty-eighth aspect, an embodiment of this application provides a communication apparatus. The communication apparatus includes a logic circuit and an interface, the logic circuit is coupled to the interface, the logic circuit is configured to determine a third communication frame, and the interface is configured to output the third communication frame.

According to a twenty-ninth aspect, an embodiment of this application provides a communication apparatus. The communication apparatus includes a logic circuit and an interface, the logic circuit is coupled to the interface, the interface is configured to input a third communication frame, and the logic circuit is configured to parse the third communication frame.

It may be understood that, for the communication apparatuses according to the twenty-eighth aspect and the twenty-ninth aspect, refer to the seventh aspect, the eighth aspect, or the following specific implementations.

According to a thirtieth aspect, an embodiment of this application provides a communication apparatus. The communication apparatus includes a logic circuit and an interface, the logic circuit is coupled to the interface, the logic circuit is configured to determine a second communication frame, and the interface is configured to output the second communication frame.

According to a thirty-first aspect, an embodiment of this application provides a communication apparatus. The communication apparatus includes a logic circuit and an interface, the logic circuit is coupled to the interface, the interface is configured to input a second communication frame, and the logic circuit is configured to parse the second communication frame.

It may be understood that, for the communication apparatuses according to the thirtieth aspect and the thirty-first aspect, refer to the ninth aspect, the tenth aspect, or the following specific implementations.

According to a thirty-second aspect, an embodiment of this application provides a computer-readable storage medium. The computer-readable storage medium is configured to store a computer program, and when the computer program is run on a computer, the method according to any one of the first aspect to the tenth aspect or any possible implementation is performed.

According to a thirty-third aspect, an embodiment of this application provides a computer program product. The computer program product includes a computer program, and when the computer program is run on a computer, the method according to any one of the first aspect to the tenth aspect or any possible implementation is performed.

According to a thirty-fourth aspect, an embodiment of this application provides a computer program. When the computer program is run on a computer, the method according to any one of the first aspect to the tenth aspect or any possible implementation is performed.

According to a thirty-fifth aspect, an embodiment of this application provides a communication system. The communication system includes a first communication apparatus and a second communication apparatus. The first communication apparatus is configured to perform the method according to the first aspect or any possible implementation of the first aspect, and the second communication apparatus is configured to perform the method according to the second aspect or any possible implementation of the second aspect. Alternatively, the first communication apparatus is configured to perform the method according to the third aspect or any possible implementation of the third aspect, and the second communication apparatus is configured to perform the method according to the fourth aspect or any possible implementation of the fourth aspect. Alternatively, the first communication apparatus is configured to perform the method according to the fifth aspect or any possible implementation of the fifth aspect, and the second communication apparatus is configured to perform the method according to the sixth aspect or any possible implementation of the sixth aspect. Alternatively, the first communication apparatus is configured to perform the method according to the seventh aspect or any possible implementation of the seventh aspect, and the second communication apparatus is configured to perform the method according to the eighth aspect or any possible implementation of the eighth aspect. Alternatively, the first communication apparatus is configured to perform the method according to the ninth aspect or any possible implementation of the ninth aspect, and the second communication apparatus is configured to perform the method according to the tenth aspect or any possible implementation of the tenth aspect.

### BRIEF DESCRIPTION OF DRAWINGS

The following describes the accompanying drawings in embodiments of this application.
FIG. 1 is a diagram of an architecture of a communication system according to an embodiment of this application;
FIG. 2 is a diagram of a manner of a connection between a multi-link AP and a multi-link STA according to an embodiment of this application;
FIG. 3a shows a scenario in which an AP MLD communicates with a non-AP MLD according to an embodiment of this application;
FIG. 3b shows a scenario in which an AP MLD communicates with a non-AP MLD according to an embodiment of this application;
FIG. 4 is a diagram of an architecture of a communication system according to an embodiment of this application;
FIG. 5 is a diagram of interaction of a multi-link communication method according to an embodiment of this application;
FIG. 6a is a diagram of a reconfiguration multi-link element according to an embodiment of this application;
FIG. 6b is a diagram of another reconfiguration multi-link element according to an embodiment of this application;
FIG. 7a is a diagram of a first communication frame according to an embodiment of this application;
FIG. 7b is a diagram of another first communication frame according to an embodiment of this application;
FIG. 8 is a diagram of a neighbor report element according to an embodiment of this application;
FIG. 9 is a diagram of a frame format according to an embodiment of this application;
FIG. 10 is a diagram of interaction of another multi-link communication method according to an embodiment of this application;
FIG. 11 is a diagram of a BTM request frame according to an embodiment of this application;
FIG. 12 is a diagram of interaction of still another multi-link communication method according to an embodiment of this application;
FIG. 13 is a diagram of a probe request multi-link element according to an embodiment of this application;
FIG. 14 is a diagram of interaction of still another multi-link communication method according to an embodiment of this application;
FIG. 15 is a diagram of interaction of still another multi-link communication method according to an embodiment of this application;
FIG. 16 is a diagram of a structure of a communication apparatus according to an embodiment of this application;
FIG. 17 is a diagram of a structure of a communication apparatus according to an embodiment of this application; and
FIG. 18 is a diagram of a structure of a communication apparatus according to an embodiment of this application.

### DESCRIPTION OF EMBODIMENTS

For ease of understanding of technical solutions in this application, the following further describes this application with reference to accompanying drawings.

In this specification, the claims, and the accompanying drawings of this application, terms "first", "second", and the like (not limited to "first" and "second") are merely intended to distinguish between different objects but do not indicate a particular order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiment" mentioned in this specification means that specific features, structures, or characteristics described in combination with the embodiment may be included in at least one embodiment of this application. The phrase shown in various locations in this specification may not necessarily mean a same embodiment, and is not an independent or optional embodiment exclusive from another embodiment. A person skilled in the art may explicitly and implicitly understand that embodiments described in this specification may be combined with other embodiments.

In this application, "at least one (piece)" means one or more, "a plurality of" means two or more, "at least two (pieces)" means two, three, or more, and "and/or" is used to describe an association relationship between associated objects, and indicates that three relationships may exist. For example, "A and/or B" may indicate the following three cases: Only A exists, only B exists, and both A and B exist, where A and B may be singular or plural. In addition, "or" indicates that two relationships may exist, for example, only A exists and only B exists. When A and B are not mutually exclusive, it may indicate that three relationships exist, for example, only A exists, only B exists, and both A and B exist. A character "/" generally indicates an "or" relationship between the associated objects. In addition, "at least one of the following items (pieces)" or a similar expression thereof means any combination of these items. For example, at least one of a, b, or c may represent: a, b, c, "a and b", "a and c", "b and c", or "a, b, and c".

The technical solutions provided in embodiments of this application may be applied to a WLAN system, for example, Wi-Fi. For example, methods provided in embodiments of this application are applicable to a wireless local area network system for the IEEE 802.11 series protocols, for example, the 802.11a/b/g protocol, the 802.11n protocol, the 802.11ac protocol, the 802.11ax protocol, the 802.11be protocol or Wi-Fi 7 or the EHT protocol, and a next-generation protocol such as Wi-Fi 8, UHR, and Wi-Fi AI. The technical solutions provided in embodiments of this application may be further applied to a wireless personal area network (wireless personal area network, WPAN) based on a UWB technology, a sensing system, and the like. For example, the methods provided in embodiments of this application are further applicable to the IEEE 802.15 series protocols such as the 802.15.4a protocol, the 802.15.4z protocol, the 802.15.4ab protocol, and a future generation of UWB WPAN protocol. Examples are not enumerated herein. The technical solutions provided in embodiments of this application may be further applied to the following communication systems, for example, an internet of things (internet of things, IoT) system, a vehicle to X (vehicle to X, V2X) system, and a narrow band internet of things (narrow band internet of things, NB-IoT) system, or may be applied to a device in the internet of vehicles, an internet of things node, a sensor, or the like in the internet of things (IoT, internet of things), a smart camera, a smart remote control, or a smart water/electricity meter in smart home, a sensor in smart city, or the like, or are applicable to a long term evolution (long term evolution, LTE) system, a 5th generation (5^{th}-generation, 5G) communication system, a new communication system emerging in future communication development, or the like.

The WLAN system can provide high-rate and low-latency transmission. With continuous evolution of WLAN application scenarios, the WLAN system is to be used in more scenarios or industries, for example, the internet of things industry, the internet of vehicles industry, the banking industry, enterprise offices, exhibition halls of stadiums, concert halls, hotel rooms, dormitories, hospital wards, classrooms, supermarkets, squares, streets, production workshops, and warehousing. Certainly, a device (for example, an access point or a station) that supports WLAN communication or sensing may be a sensor node (for example, a smart water meter, a smart electricity meter, or a smart air detection node) in smart city, a smart device (for example, a smart camera, a projector, a display, a television, a stereo, a refrigerator, or a washing machine) in smart home, a node in the internet of things, an entertainment terminal (for example, a wearable device such as augmented reality (augmented reality, AR) or virtual reality (virtual reality, VR)), a smart device (for example, a printer, a projector, a speaker, or a stereo) in smart office, an internet of vehicles device in the internet of vehicles, an infrastructure (for example, a vending machine, a self-service navigation console of a supermarket, a self-service cashier, or a self-service ordering machine) in a daily life scenario, a device in a large sports or music venue, or the like. For example, the access point and the station may be devices used the internet of vehicles, internet of things nodes, sensors, or the like in the internet of things, smart cameras, smart remote controls, smart water/electricity meters in smart home, or sensors in smart city.

Although embodiments of this application mainly use a WLAN as an example, especially a network applied to the IEEE 802.11 series standards, for example, a system supporting Wi-Fi 7 that may also be referred to as extremely high throughput (extremely high throughput, EHT) or a system supporting Wi-Fi 8 that may also be referred to as ultra high reliability (ultra high reliability, UHR) or ultra high reliability and throughput (ultra high reliability and throughput, UHRT), a person skilled in the art easily understands that various aspects in embodiments of this application may be extended to another network using various standards or protocols, for example, Bluetooth (Bluetooth), a high performance radio LAN (high performance radio LAN, HIPERLAN) (a wireless standard that is similar to the IEEE 802.11 standard and is mainly used in Europe), a wide area network (WAN), or another network known or developed in the future.

A multi-link device (multi-link device, MLD) is a device having a plurality of stations (such as APs or non-AP STAs) simultaneously operating on different frequency bands or channels respectively. When a channel spacing between two stations in one multi-link device is large enough, the two stations may not interfere with each other and may run independently. If one of any two stations can perform sending and the other station can perform receiving simultaneously, it may be referred to as that a simultaneous transmitting and receiving (simultaneous transmitting and receiving, STR) capability is supported between the two stations; otherwise, it is referred to as that there is a non-simultaneous transmitting and receiving (non-simultaneous transmitting and receiving, NSTR) capability between the two stations. The multi-link device includes a plurality of affiliated stations. The affiliated station may be a physical station, or may be a logical station. Each station may operate on one link, one frequency band, one channel, or the like. The affiliated station may be an AP or a non-AP STA. For ease of description, in embodiments of this application, a multi-link device whose affiliated station is an AP may be referred to as a multi-link AP, a multi-link AP device, or an AP multi-link device (AP multi-link device, AP MLD); and a multi-link device whose affiliated station is a non-AP STA is referred to as a multi-link STA, a multi-link STA device, or a STA multi-link device (STA multi-link device), or a multi-link device whose affiliated station is a non-AP STA is referred to as a multi-link non-AP, a multi-link non-AP device, or a non-AP multi-link device (non-AP multi-link device, non-AP MLD). The multi-link device (which may be a non-AP MLD or an AP MLD herein) is a communication apparatus having a wireless communication function. The communication apparatus may be an entire device, or may be a chip, a processing system, or the like installed in the entire device. The device in which the chip or the processing system is installed may implement methods and functions in embodiments of this application under control of the chip or the processing system.

The multi-link device MLD may comply with the 802.11 series protocols to implement wireless communication, for example, comply with extremely high throughput (Extremely High Throughput, EHT), or comply with and be based on 802.11be, or be compatible with and support 802.11be, to implement communication with another device. Certainly, the another device may be a multi-link device, or may not be a multi-link device.

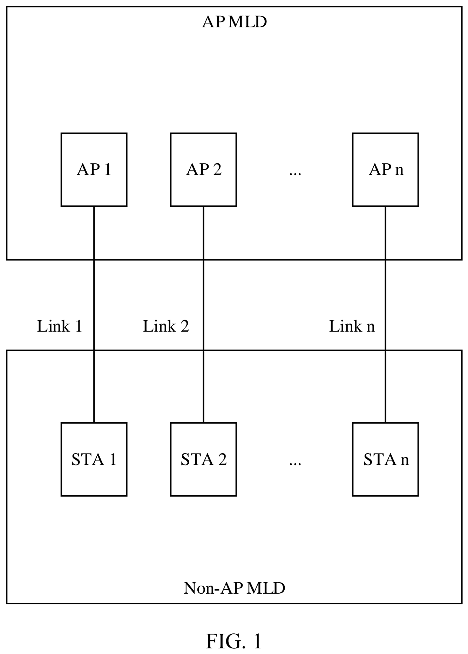

FIG. 1 is a diagram of an architecture of a communication system according to an embodiment of this application. As shown in FIG. 1, an AP MLD includes an AP 1, an AP 2, ..., and an AP n, and a non-AP MLD includes a STA 1, a STA 2, ..., and a STA n. Herein, n is a positive integer. The AP MLD and the non-AP MLD may perform parallel communication through a link 1, a link 2, ..., and a link n. The STA 1 in the non-AP MLD establishes an association relationship with the AP 1 in the AP MLD. The STA 2 in the non-AP MLD establishes an association relationship with the AP 2 in the AP MLD. The STA n in the non-AP MLD establishes an association relationship with the AP n in the AP MLD. Therefore, one or more STAs in the non-AP MLD and one or more APs in the AP MLD may communicate after establishing an association relationship. Frequency bands on which multi-link devices (including the AP MLD and the non-AP MLD) operate may include but are not limited to sub 1 GHz, 2.4 GHz, 5 GHz, 6 GHz, and high-frequency 60 GHz. For example, methods provided in embodiments of this application are applicable to but are not limited to single-user uplink/downlink transmission, multi-user uplink/downlink transmission, vehicle-to-everything (vehicle-to-everything, V2X, where X may represent everything), and device-to-device (device-to-device, D2D). For example, the V2X may include vehicle to vehicle (vehicle to vehicle, V2V), vehicle to infrastructure (vehicle to infrastructure, V2I), vehicle to pedestrian (vehicle to pedestrian, V2P), or vehicle to network (vehicle to network, V2N) communication.

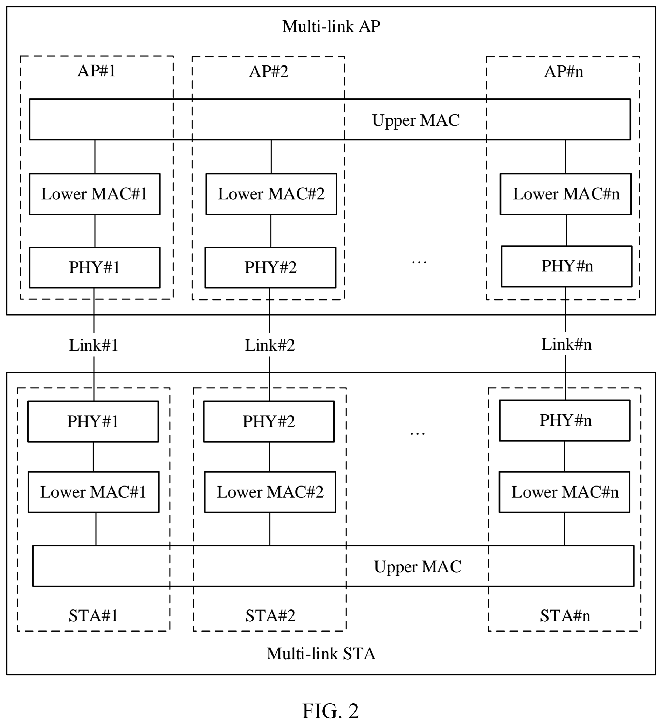

FIG. 2 is a diagram of a manner of a connection between a multi-link AP and a multi-link STA according to an embodiment of this application. The 802.11 standard focuses on 802.11 physical layer (physical layer, PHY) and medium access control (medium access control, MAC) layer parts in a multi-link device. Therefore, FIG. 2 shows only examples of PHY and MAC layers.

As shown in FIG. 2, a multi-link device (for example, a multi-link AP and a multi-link STA) may include a physical layer (physical layer, PHY) (PHY#1, PHY#2, and PHY#n shown in FIG. 2) and a medium access control (medium access control, MAC) layer. The physical layer may be used to process a physical layer signal, and the MAC layer may be used to process a MAC layer signal. The MAC layer may be further divided into one upper MAC (high-MAC) layer (upper MAC shown in FIG. 2) and a plurality of lower MAC (low-MAC) layers (lower MAC#1, and lower MAC#2 to lower MAC#n shown in FIG. 2). As shown in FIG. 2, a plurality of APs included in the multi-link AP are independent of each other at the lower MAC layer and the PHY layer, and share the upper MAC layer; and a plurality of STAs included in the multi-link STA are independent of each other at the lower MAC layer and the PHY layer, and share the upper MAC layer. The upper MAC layer is separately connected to the plurality of lower MAC layers, that is, the upper MAC layer is shared by a plurality of links. For example, the upper MAC layer mainly completes operations like allocation, encryption, and decryption of a sequence number (sequence number, SN) and a packet number (packet number, PN) of a MAC service data unit (MAC service data unit, MSDU). For example, the lower MAC layer mainly completes operations like assembly, channel access, packet sending, and reception acknowledgment of a MAC protocol data unit (MAC protocol data unit, MPDU) of a respective link.

In FIG. 2, PHY#1, lower MAC#1, and upper MAC in the multi-link AP may be considered as AP#1, PHY#2, lower MAC#2, and upper MAC may be considered as AP#2, ..., and PHY#n, lower MAC#n, and upper MAC may be considered as AP#n. In other words, it may be understood as that the multi-link AP includes n AP entities. A similar situation exists in the multi-link STA. To be specific, upper MAC in the multi-link STA is also shared by a plurality of links; and PHY#1, lower MAC#1, and upper MAC are considered as STA#1, PHY#2, lower MAC#2, and upper MAC are considered as STA#2, ..., and PHY#n, lower MAC#n, and upper MAC are considered as STA#n. In other words, it may be understood as that the multi-link STA includes n STA entities. As shown in FIG. 2, PHY#1 of AP#1 in the multi-link AP and PHY#1 of STA#1 in the multi-link STA operate on a same channel, and AP#1 in the multi-link AP and STA#1 in the multi-link STA implement communication through a link (for example, link#1 shown in FIG. 2); PHY#2 of AP#2 in the multi-link AP and PHY#2 of STA#2 in the multi-link STA operate on another same channel, and AP#2 in the multi-link AP and STA#2 in the multi-link STA implement communication through a link (link#2 shown in FIG. 2); and PHY#n of AP#n in the multi-link AP and PHY#n of STA#n in the multi-link STA operate on another same channel, and AP#n in the multi-link AP and STA#n in the multi-link STA implement communication through a link (link#n shown in FIG. 2).

For example, both the upper MAC layer and the lower MAC layer may be implemented by one processor in a chip system of the multi-link device, or may be implemented by different software processing modules in one chip system. Examples are not enumerated in embodiments of this application. It may be understood that FIG. 2 may be understood as that the multi-link device is divided into functional modules, and the modules shown in FIG. 2 may be implemented in a form of hardware, or may be implemented in a form of software functional modules, or the like. The PHY and MAC layers shown in FIG. 2 may be understood as a logical function division. During actual implementation, there may be another division manner. In FIG. 2, n may be equal to 1, or n is an integer greater than 1, or the like.

The upper MAC layer may also be referred to as an MLD upper MAC sublayer (MLD upper MAC sublayer), and the lower MAC layer may also be referred to as an MLD lower MAC sublayer (MLD lower MAC sublayer). In addition to a respective MAC address (MAC address) on each link, each multi-link device further has one MLD MAC address (MLD MAC address). The architecture shown in FIG. 2 is used as an example. The upper MAC layer may be uniquely identified by using a corresponding MLD MAC address. The lower MAC layer may be uniquely identified by using a MAC address of a corresponding link. For example, lower MAC#1 and lower MAC#2 may respectively correspond to MAC addresses of respective links.

For example, the multi-link device in embodiments of this application may be a single-antenna device, or may be a multi-antenna device, for example, may be a device with more than two antennas. A quantity of antennas included in the multi-link device is not limited in embodiments of this application.

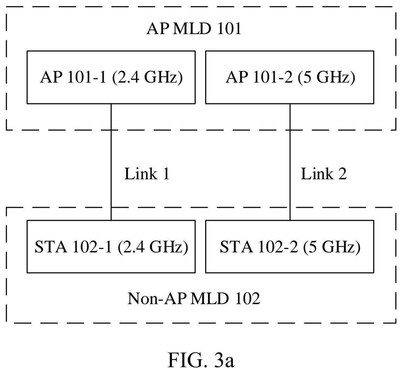

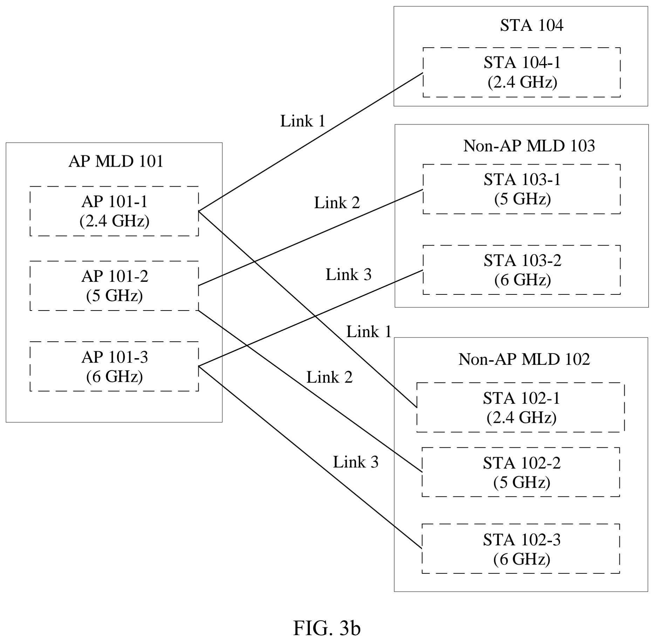

Frequency bands on which the multi-link device operates may include but are not limited to sub 1 GHz, 2.4 GHz, 5 GHz, 6 GHz, and high-frequency 60 GHz. FIG. 3a and FIG. 3b are two diagrams of communication between a multi-link device and another device in a wireless local area network through a plurality of links.

FIG. 3a shows a scenario in which an AP MLD 101 communicates with a non-AP MLD 102. The AP MLD 101 includes affiliated AP 101-1 and AP 101-2; the non-AP MLD 102 includes affiliated STA 102-1 and STA 102-2; and the AP MLD 101 and the non-AP MLD 102 perform parallel communication through a link 1 and a link 2.

For example, FIG. 3b shows a scenario in which an AP MLD 101 communicates with a non-AP MLD 102, a non-AP MLD 103, and a STA 104. The AP MLD 101 includes an affiliated AP 101-1 to an affiliated AP 101-3; the non-AP MLD 102 includes three affiliated STAs: STA 102-1, STA 102-2, and STA 102-3; the non-AP MLD 103 includes two affiliated STAs: STA 103-1 and STA 103-2; and the STA 104 is a single-link device and includes a STA 104-1. The AP MLD 101 may separately communicate with the non-AP MLD 102 through a link 1, a link 2, and a link 3, communicate with the non-AP MLD 103 through the link 2 and the link 3, and communicate with the STA 104 through the link 1. In an example, the STA 104 operates on a 2.4 GHz frequency band; in the non-AP MLD 103, the STA 103-1 operates on a 5 GHz frequency band, and the STA 103-2 operates on a 6 GHz frequency band; and in the non-AP MLD 102, the STA 102-1 operates on a 2.4 GHz frequency band, the STA 102-2 operates on a 5 GHz frequency band, and the STA 102-3 operates on a 6 GHz frequency band. The AP 101-1 operating on the 2.4 GHz frequency band in the AP MLD 101 may communicate uplink or downlink data with the STA 104 and the STA 102-1 in the non-AP MLD 102 through the link 1. The AP 101-2 operating on the 5 GHz frequency band in the AP MLD 101 may communicate, through the link 2, uplink or downlink data with the STA 103-1 operating on the 5 GHz frequency band in the non-AP MLD 103, and may also communicate, through the link 2, uplink or downlink data with the STA 102-2 operating on the 5 GHz frequency band in the non-AP MLD 102. The AP 101-3 operating on the 6 GHz frequency band in the AP MLD 101 may communicate, through the link 3, uplink or downlink data with the STA 102-3 operating on the 6 GHz frequency band in the non-AP MLD 102, and may also communicate, through the link 3, uplink or downlink data with the STA 103-2 in the non-AP MLD.

FIG. 3a shows that the AP MLD supports only two frequency bands. In FIG. 3b, an example in which the AP MLD 101 supports only three frequency bands (2.4 GHz, 5 GHz, and 6 GHz), each frequency band corresponds to one link, and the AP MLD 101 may operate on one or more of the link 1, the link 2, or the link 3 is used for illustration. On an AP side or a STA side, a link may also be understood as a station operating on the link. During actual application, the AP MLD and the non-AP MLD may further support more or fewer frequency bands, that is, the AP MLD and the non-AP MLD may operate on more links or fewer links. This is not limited in embodiments of this application. FIG. 3a and FIG. 3b are merely simple diagrams, and do not constitute any limitation on the protection scope of embodiments of this application.

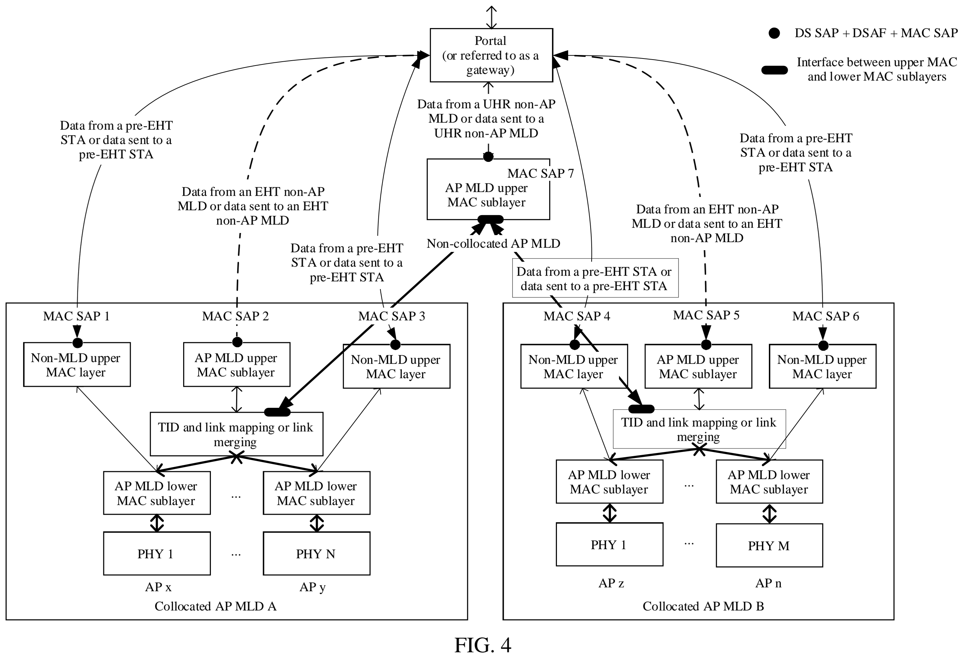

FIG. 4 is a diagram of an architecture of a communication system according to an embodiment of this application. The architecture shown in FIG. 4 includes a UHR system, an EHT system, and a system before the EHT (for example, referred to as a pre-EHT). It may be understood that lines, dashed lines, or the like with different thicknesses shown in FIG. 4 are used to represent different transmission paths. Generally, an interface between a distributed system and a MAC layer may be referred to as a distributed system service access point (distributed system service access point, DS SAP), a distributed system access function (distributed system access function, DSAF), or a MAC service access point (service access point, SAP) (MAC SAP for short, for example, a MAC SAP 1 to a MAC SAP 7 shown by seven black dots in FIG. 4). A MAC address can uniquely identify a MAC SAP. It may be understood that a representation manner (for example, representation by using a black dot) and a representation location (for example, a location of the black dot) of the MAC SAP shown in FIG. 4 are merely examples, and should not be construed as a limitation on embodiments of this application. An interface between an upper MAC layer (for example, a radio resource control (radio resource control, RRC) layer) and a lower MAC layer is shown by a thick solid line in FIG. 4.

A non-collocated AP MLD (non-collocated AP MLD) may also be referred to as a logical AP MLD (logical AP MLD). A collocated AP MLD (collocated AP MLD) may also be referred to as a physical AP MLD (physical AP MLD). For ease of description, the following uses the non-collocated AP MLD and the collocated AP MLD as an example to describe methods provided in embodiments of this application.

In an example, because data of a pre-EHT STA is associated with an affiliated AP, all data related to the pre-EHT STA needs to be received and sent by using a MAC SAP (for example, the MAC SAP 1, the MAC SAP 3, the MAC SAP 4, and the MAC SAP 6 shown in FIG. 4) of a corresponding affiliated AP. As shown in FIG. 4, for data from the pre-EHT STA or data sent to the pre-EHT STA, an AP may process the data by using a non-multi-link device (non-MLD) upper MAC layer (for example, the MAC SAP 1, the MAC SAP 3, the MAC SAP 4, and the MAC SAP 6 shown in FIG. 4).

In another example, because data of an EHT non-AP MLD is associated with a collocated AP MLD, all data related to the EHT non-AP MLD needs to be received and sent by using a MAC SAP (for example, the MAC SAP 2 and the MAC SAP 5 shown in FIG. 4) of a corresponding collocated AP MLD. As shown in FIG. 4, for data from the EHT non-AP MLD or data sent to the EHT non-AP MLD, a collocated AP MLD may perform data processing by using an AP MLD upper MAC sublayer (for example, the MAC SAP 2 and the MAC SAP 5 shown in FIG. 4) and then perform data processing by using an AP MLD lower MAC sublayer. Each AP MLD lower MAC sublayer may correspond to one PHY. For example, for a collocated AP MLD A, AP MLD lower MAC sublayers sequentially correspond to PHY 1 (which may also be referred to as a link 1 or PHY corresponding to a link 1), ..., and PHY N (which may also be referred to as a link N or PHY corresponding to a link N); and for a collocated AP MLD B, AP MLD lower MAC sublayers may sequentially correspond to PHY 1 (which may also be referred to as the link 1 or PHY corresponding to the link 1), ..., and PHY M (which may also be referred to as a link M or PHY corresponding to a link M), where A and B are used to distinguish between different collocated AP MLDs, and M and N are both positive integers.

In still another example, because data of a UHR non-AP MLD is associated with a non-collocated AP MLD, all data related to the UHR non-AP MLD needs to be received and sent by using a MAC SAP (for example, the MAC SAP 7 shown in FIG. 4) of a corresponding non-collocated AP MLD. As shown in FIG. 4, for data from the UHR non-AP MLD or data sent to the UHR non-AP MLD, a non-collocated AP MLD processes the data by using an AP MLD upper MAC sublayer and then delivers the data to a related module of TID and link mapping or link merging through an interface between the upper MAC sublayer and a lower MAC sublayer.

For example, function division of the upper MAC sublayer and the lower MAC sublayer of the non-collocated AP MLD may depend on whether a traffic identifier (traffic identifier, TID) is allowed to be mapped to links of different collocated AP MLDs. For example, when a traffic identifier (traffic identifier, TID) is allowed to be mapped to links of different collocated AP MLDs, a block acknowledgment (block ACK, BA) session of the TID needs to be maintained at the upper MAC sublayer of the non-collocated AP MLD, and the session may be refreshed based on BA information fed back by a corresponding collocated AP MLD.

It may be understood that an AP MLD upper MAC sublayer functional block may be placed in a collocated AP MLD, or may be placed in an access point controller, or may be placed in a portal (portal, or referred to as a gateway), or the like. A manner of setting an upper MAC sublayer of a non-collocated AP MLD is not limited in embodiments of this application. An AP MLD upper MAC sublayer and an AP MLD lower MAC sublayer may communicate with each other by using a network cable or another technology. For example, a plurality of collocated AP MLDs affiliated with the non-collocated AP MLD may not be located in a same device.

For example, the non-collocated AP MLD may be understood as an AP MLD including a plurality of collocated AP MLDs. Alternatively, the non-collocated AP MLD may be understood as a device configured to centrally or uniformly manage (or control) a plurality of collocated AP MLDs.

The relationship between a MAC address of an MLD and a MAC address of a link affiliated with the MLD shown in FIG. 2 is used as an example. In this case, there is also a similar relationship between a non-collocated AP MLD and a collocated AP MLD. For example, each non-collocated AP MLD has a non-collocated MLD MAC address (for example, the upper MAC sublayer of the non-collocated AP MLD shown in FIG. 4), an MLD MAC address of a collocated AP MLD affiliated with the non-collocated AP MLD, and a MAC address of a link affiliated with the collocated AP MLD. It may be understood that the non-collocated MLD MAC address may be understood as a MAC address of the AP MLD upper MAC sublayer shown in FIG. 4 (for example, the MAC address of the AP MLD upper MAC sublayer may identify the MAC SAP 7). In addition, n collocated AP MLDs affiliated with a non-collocated AP MLD may also be referred to as that the non-collocated AP MLD includes the n collocated AP MLDs, or the non-collocated AP MLD corresponds to the n collocated AP MLDs, or the like.

It may be understood that the relationship between a non-collocated AP MLD and a collocated AP MLD may be described differently with progress of the standard. Therefore, the description of the relationship between a non-collocated AP MLD and a collocated AP MLD is not limited in embodiments of this application.

In embodiments of this application, a first communication apparatus may be an AP, and a second communication apparatus may be a STA. Alternatively, in a possible implementation, a first communication apparatus may be a non-collocated AP MLD, and a second communication apparatus may be a non-AP MLD associated with the non-collocated AP MLD.

In the communication system shown in FIG. 4, an AP MLD may include a collocated AP MLD and a non-collocated AP MLD. An EHT non-AP MLD is associated with the collocated AP MLD, and a UHR non-AP MLD may be associated with the non-collocated AP MLD. However, in some scenarios (such as software upgrade and maintenance, and device failure), the collocated AP MLD or the non-collocated AP MLD needs to be terminated. Therefore, how to terminate the collocated AP MLD or the non-collocated AP MLD is a problem that needs to be urgently resolved.

In view of this, an embodiment of this application provides a multi-link communication method, so as to implement termination of a collocated AP MLD or a non-collocated AP MLD, so that a non-AP MLD associated with the collocated AP MLD or the non-collocated AP MLD can perform BSS transition in time.

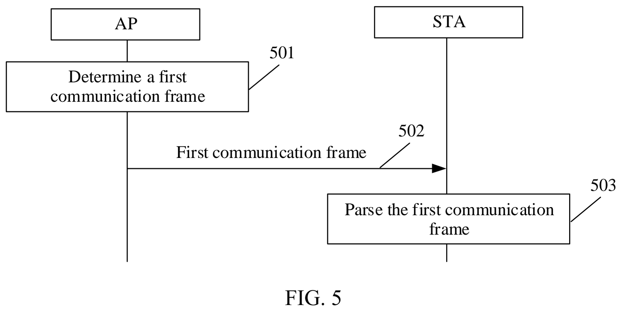

FIG. 5 is a diagram of interaction of a multi-link communication method according to an embodiment of this application. As shown in FIG. 5, for descriptions of a non-collocated AP MLD, a collocated AP MLD, a non-AP MLD, and the like in the method, refer to the foregoing descriptions. Details are not described in the method shown in FIG. 5. It may be understood that, although a relay node is not involved in the method shown below, a person skilled in the art may learn that, when a receiving party and a sending party communicate with each other, a forwarding operation may be performed by using the relay node. As shown in FIG. 5, the method includes the following steps.

501: An AP determines a first communication frame, where the first communication frame includes identification information of a first AP MLD and first indication information, and the first indication information indicates a termination time of the first AP MLD.

For example, the AP may be an AP affiliated with a collocated AP MLD affiliated with a non-collocated AP MLD, or the AP may be an AP affiliated with a collocated AP MLD, and the AP may also be referred to as an affiliated AP (affiliated AP). The first AP MLD may be a non-collocated AP MLD or a collocated AP MLD. When the first AP MLD is a collocated AP MLD, the first communication frame further includes identification information of a non-collocated AP MLD with which the collocated AP MLD is affiliated.

For example, the identification information of the first AP MLD may include a MAC address of the first AP MLD or an ID of the first AP MLD.

Optionally, the first communication frame further includes sixth indication information, and the sixth indication information indicates a candidate neighboring node that performs BSS transition. For example, the sixth indication information may include information about a neighboring AP MLD of the first AP MLD or a neighboring AP of an affiliated AP of the first AP MLD. When the first AP MLD needs to be terminated, the first communication frame may be sent by using the affiliated AP of the first AP MLD, to indicate the termination time of the first AP MLD and the candidate neighboring node that performs BSS transition, so that a non-AP MLD associated with the first AP MLD performs BSS transition. It should be noted that first communication frames sent by all affiliated APs of the first AP MLD may carry sixth indication information that is not completely the same.

In a possible implementation, the first indication information includes first duration, and the first duration indicates that the first AP MLD is terminated after the first duration. For example, a unit of the first duration is a time unit (time unit, TU), that is, the first indication information indicates a quantity of time units after which the first AP MLD is terminated.

Optionally, before sending the first communication frame, the AP may further obtain the communication frame. A manner in which the AP obtains the first communication frame may be that the AP generates the first communication frame, or the AP obtains the first communication frame from a collocated AP MLD or a non-collocated AP MLD. For example, when the first AP MLD is a non-collocated AP MLD, and the non-collocated AP MLD needs to be terminated, the non-collocated AP MLD may send an instruction to a collocated AP MLD affiliated with the non-collocated AP MLD, so that the collocated AP MLD affiliated with the non-collocated AP MLD generates the first communication frame; or the non-collocated AP MLD sends, by using a collocated AP MLD affiliated with the non-collocated AP MLD, an instruction to an affiliated AP affiliated with the collocated AP MLD, so that the affiliated AP generates the first communication frame.

It may be understood that, based on the system architecture shown in FIG. 4, it can be learned that different collocated AP MLDs may have different software/hardware/software-hardware combination modules (for example, MAC and PHY layers), and different APs in a same collocated AP MLD may also have different software/hardware/software-hardware combination modules (for example, different MAC and PHY layers). In this case, it may be understood that the first communication frame is generated by the module. Alternatively, during specific implementation, different APs in a collocated AP MLD may share a same processor. In this case, it may be understood that the first communication frame is generated by the processor. Alternatively, when an upper MAC sublayer of a non-collocated AP MLD is independently located in a controller, the controller may generate the first communication frame. In addition, after generating the first communication frame, the controller may send the first communication frame to the AP.

502: The AP sends the first communication frame, and correspondingly a STA receives the first communication frame.

503: The STA parses the first communication frame.

For example, the STA is affiliated with a non-AP MLD. The non-AP MLD may determine, based on the identification information of the first AP MLD, whether the non-AP MLD is associated with the first AP MLD. When the non-AP MLD is associated with the first AP MLD, the non-AP MLD performs BSS transition. For example, the non-AP MLD may be transited to the candidate neighboring node indicated by the sixth indication information.

In this embodiment of this application, the first indication information may indicate that a collocated AP MLD or a non-collocated AP MLD is to be terminated, so as to implement termination of the collocated AP MLD or the non-collocated AP MLD, so that a non-AP MLD associated with the collocated AP MLD or the non-collocated AP MLD can perform BSS transition in time.

For example, for the first communication frame, this embodiment of this application further provides the following several implementations.

Implementation 1: The first communication frame may be a beacon frame, and the identification information of the first AP MLD, the first indication information, and the sixth indication information are included in a reconfiguration multi-link element (reconfiguration multi-link element) of the first communication frame.

For example, when a non-collocated AP MLD determines that the non-collocated AP MLD needs to be terminated, the non-collocated AP MLD may send a beacon frame on a link on which each affiliated AP of each collocated AP MLD affiliated with the non-collocated AP MLD is located, where the beacon frame carries a reconfiguration multi-link element, to indicate a non-AP MLD associated with the non-collocated AP MLD to perform BSS transition. Alternatively, when a collocated AP MLD needs to be terminated, the collocated AP MLD may include a reconfiguration multi-link element in a beacon frame sent on a link on which each affiliated AP of the collocated AP MLD is located, to indicate a non-AP MLD associated with the collocated AP MLD to perform BSS transition.

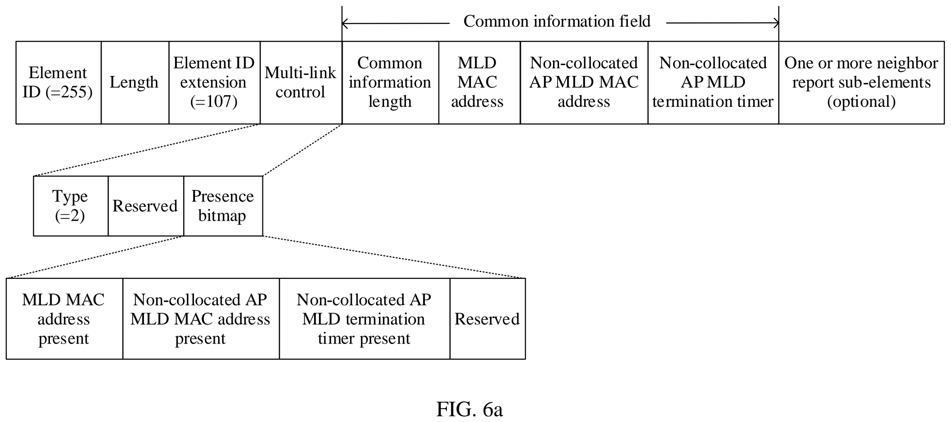

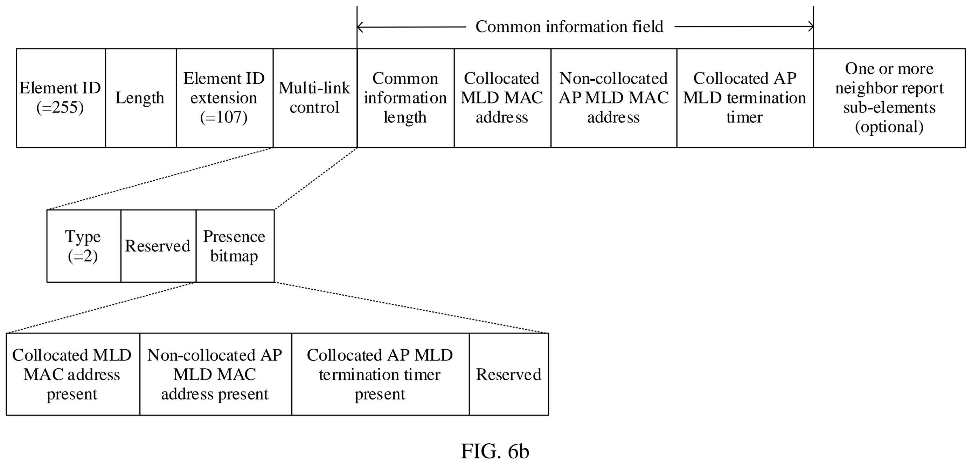

For example, FIG. 6a and FIG. 6b each show an example of a reconfiguration multi-link element according to an embodiment of this application. As shown in FIG. 6a, when the first AP MLD is a non-collocated AP MLD, the reconfiguration multi-link element may include a non-collocated AP MLD MAC address (non-collocated AP MLD MAC address) field, a non-collocated AP MLD termination timer (non-collocated AP MLD termination timer) field, and optionally one or more neighbor report sub-elements. Identification information of the non-collocated AP MLD is carried in the non-collocated AP MLD MAC address field. The first indication information is carried in the non-collocated AP MLD termination timer field. The sixth indication information is carried in the neighbor report sub-element.

Optionally, the reconfiguration multi-link element may further include a collocated AP MLD MAC address field, and the collocated AP MLD MAC address field carries identification information of a current collocated AP MLD affiliated with the non-collocated AP MLD.

For example, the reconfiguration multi-link element may further include a presence bitmap (presence bitmap), and the presence bitmap indicates whether the reconfiguration multi-link element includes the following fields: collocated AP MLD MAC address field, non-collocated AP MLD MAC address field, and non-collocated AP MLD termination timer field. For example, the presence bitmap includes a non-collocated AP MLD MAC address present (non-collocated AP MLD MAC address present) field and a non-collocated AP MLD termination timer present (non-collocated AP MLD termination timer present) field, the non-collocated AP MLD MAC address present field indicates whether the reconfiguration multi-link element includes the non-collocated AP MLD MAC address field, and the non-collocated AP MLD termination timer present field indicates whether the reconfiguration multi-link element includes the non-collocated AP MLD termination timer field.

As shown in FIG. 6b, when the first AP MLD is a collocated AP MLD, the reconfiguration multi-link element further includes identification information of a non-collocated AP MLD with which the collocated AP MLD is affiliated. In other words, the reconfiguration multi-link element may include a collocated AP MLD MAC address field, a non-collocated AP MLD MAC address field, and a collocated AP MLD termination timer (collocated AP MLD termination timer) field. Identification information of the collocated AP MLD is carried in the collocated AP MLD MAC address field. Identification information of the non-collocated AP MLD with which the collocated AP MLD is affiliated is carried in the non-collocated AP MLD MAC address field. The first indication information is carried in the collocated AP MLD termination timer. The sixth indication information is carried in the neighbor report sub-element.

For example, the reconfiguration multi-link element may further include a presence bitmap, and the presence bitmap indicates whether the reconfiguration multi-link element includes the following fields: collocated AP MLD MAC address field, non-collocated AP MLD MAC address field, non-collocated AP MLD termination timer field, and collocated AP MLD termination timer field. For example, the presence bitmap includes a collocated AP MLD termination timer present (collocated AP MLD termination timer present) field, and the collocated AP MLD termination timer field indicates whether the reconfiguration multi-link device includes the collocated AP MLD termination timer field.

It may be understood that, in some implementations, the reconfiguration multi-link element may include a non-collocated AP MLD termination timer field and a collocated AP MLD termination timer field. The reconfiguration multi-link element may use the non-collocated AP MLD termination timer field to indicate that a non-collocated AP MLD is terminated, and use the collocated AP MLD termination timer field to indicate that a collocated AP MLD is terminated.

For example, the reconfiguration multi-link element listed above may further include a field specifically included in a reconfiguration multi-link element defined by a protocol. For example, as shown in FIG. 6a or FIG. 6b, the reconfiguration multi-link element may include an element ID (element ID) (for example, element ID=255), a length (length), an element ID extension (element ID extension) (for example, element ID extension=107), a multi-link control field, a common information field (common info field), and a link information field (link info field). For example, the multi-link control field may include a type (type) (for example, type=2), a reserved (reserved) field, and a presence bitmap, and the presence bitmap indicates whether related information in the common information field is present. For example, the common information field may include a common information length (common info length) field and at least one of an MLD MAC address (MAC address of an MLD that sends a reconfiguration multi-link element) field, a collocated AP MLD MAC address field, a collocated AP MLD termination timer field, a non-collocated AP MLD MAC address field, and a non-collocated AP MLD termination timer field. Optionally, the reconfiguration multi-link element may further include one or more per-STA profile (per-STA profile) fields, and the per-STA profile field may include a sub-element ID (sub-element ID) (for example, sub-element ID=0), a length, a STA control (STA control) field, and a STA information (STA info) field.

For example, the STA control field includes one or more of a link ID (link ID) field, a complete profile (complete profile) field, a STA MAC address present (STA MAC address present) field, an AP removal timer present (AP removal timer present) field, an operation update type (operation update type) field, an operation parameters present (operation parameters present) field, and a reserved field. The link ID field indicates an identifier of a corresponding link. The complete profile field indicates whether a complete profile is requested. The STA MAC address present field indicates whether the STA information field includes a MAC address of a corresponding STA. The AP removal timer present field indicates whether the STA information field includes an AP removal timer field. The operation update type field (4 bits) indicates a multi-link operation update type, where 1 indicates an operation parameter update, and 1 to 15 are reserved values. The operation parameters present field indicates whether the STA information field includes an operation parameters (operation parameters) field.

For example, the STA information field includes one or more of a STA information length (STA info length) field, a STA MAC address (STA MAC address) field, the AP removal timer (AP removal timer) field, and the operation parameters field. The STA information length field indicates a length of the STA information field. The STA MAC address field indicates a MAC address of a corresponding STA. The AP removal timer field indicates a quantity of target beacon transmission times (target beacon transmission time, TBTT) after which a corresponding AP is removed. The operation parameters field includes a presence indication (presence indication) field and an operation parameters information (operation parameters info) field. The presence indication field indicates whether the operation parameters field includes a corresponding field. For example, the presence indication field includes a maximum MAC protocol data unit (MAC protocol data unit, MPDU) length present (Maximum MPDU Length Present) field (indicating whether the operation parameters field includes a maximum MPDU length field) and a maximum aggregated MAC service data unit (MAC service data unit, MSD) (Aggregated MSDU, A-MSDU) length present (Maximum A-MSDU Length Present) field (indicating whether the operation parameters field includes a maximum A-MSDU length field). The operation parameters information field includes a maximum MPDU length (Maximum MPDU Length) field (indicating a maximum MPDU length), an A-MSDU length (A-MSDU Length) field (indicating a maximum A-MSDU length), and a padding (padding) field (used to carry a padding bit 0).

It may be understood that a sequence of the fields shown in FIG. 6a or FIG. 6b is not limited in embodiments of this application. It may be understood that a division manner of the fields, sub-elements, or elements in this embodiment of this application is merely an example. During specific implementation, there may be another division manner for different information in the communication frame. This is not limited in embodiments of this application.

Implementation 2: The first communication frame is a function frame that is defined to indicate that the first AP MLD is terminated. For example, the first communication frame may be an AP MLD termination announcement (AP MLD termination announcement) frame.

In this implementation, the first communication frame may not include the identification information of the first AP MLD. For example, when the first AP MLD is a non-collocated AP MLD, the first communication frame may be a non-collocated AP MLD termination announcement (non-collocated AP MLD termination announcement) frame, indicating that the non-collocated AP MLD is terminated. The first communication frame is sent by an affiliated AP of a collocated AP MLD affiliated with a non-collocated AP MLD, and a non-AP MLD that receives the first communication frame may determine, by using the affiliated AP corresponding to a transmitter address of the first communication frame, the collocated AP MLD with which the affiliated AP is affiliated and the non-collocated AP MLD with which the collocated AP MLD is affiliated, so as to determine that the non-collocated AP MLD is terminated. For example, if the non-AP MLD that receives the first communication frame is associated with the non-collocated AP MLD (for example, a UHR non-AP MLD), the non-AP MLD performs BSS transition.

For example, when the first AP MLD is a collocated AP MLD, the first communication frame may be a collocated AP MLD termination announcement (collocated AP MLD termination announcement) frame, indicating that the collocated AP MLD is terminated. The first communication frame is sent by an affiliated AP affiliated with a collocated AP MLD, and a non-AP MLD that receives the first communication frame may determine, by using the affiliated AP corresponding to a transmitter address of the first communication frame, the collocated AP MLD with which the affiliated AP is affiliated, so as to determine that the collocated AP MLD is terminated. For example, if the non-AP MLD that receives the first communication frame is associated with the collocated AP MLD (for example, an EHT non-AP MLD), the non-AP MLD performs BSS transition.

For example, the first communication frame further includes or may separately include at least one of the following: indication information (which may also be referred to as a reason code) indicating a termination reason of the first AP MLD, and one or more neighbor report elements. The one or more neighbor report elements include information about a neighboring access point AP of an AP affiliated with the first AP MLD. In other words, the first communication frame may include at least one of the identification information of the first AP MLD, the first indication information, the indication information indicating the termination reason of the first AP MLD, and the one or more neighbor report elements.

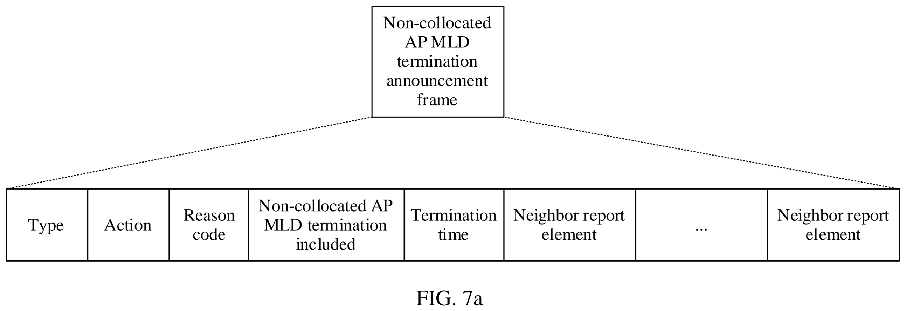

For example, as shown in FIG. 7a, when the first AP MLD is a non-collocated AP MLD, the first communication frame may include one or more of a category (category), an action (action), a reason code (reason code), a non-collocated AP MLD termination included field, a termination time (termination time), one or more neighbor report elements, and a non-collocated AP MLD MAC address. The reason code may indicate a termination reason of the non-collocated AP MLD. For example, the reason code may be set to a newly defined reason code, to indicate non-collocated AP MLD termination or non-collocated AP MLD maintenance. For example, when the reason code is set to a first value, the reason code indicates non-collocated AP MLD termination. When the reason code is set to a second value, the reason code indicates non-collocated AP MLD maintenance. The non-collocated AP MLD termination included indicates whether the non-collocated AP MLD is terminated. The termination time indicates a termination time of the non-collocated AP MLD. The one or more neighbor report elements include information about a neighboring AP of an affiliated AP of a collocated AP MLD affiliated with the non-collocated AP MLD, to recommend an optional neighbor of BSS transition to a non-AP MLD associated with the non-collocated AP MLD.

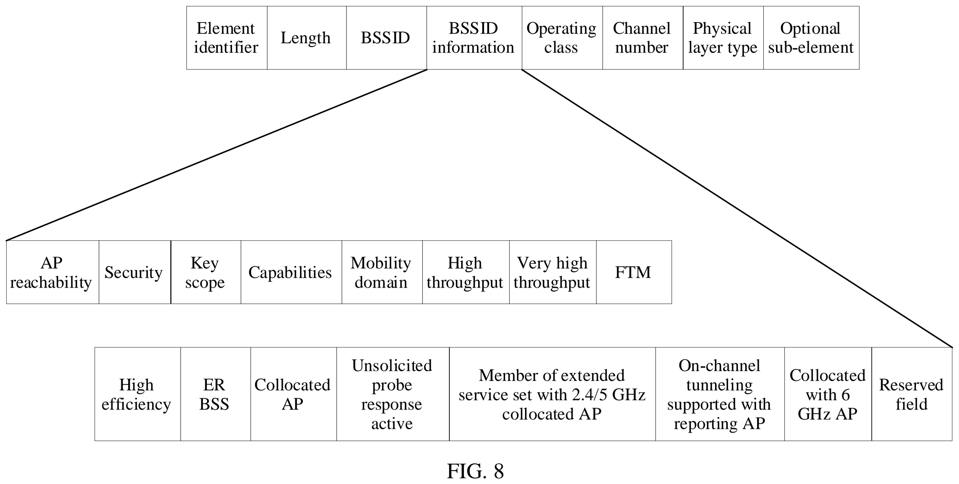

For example, as shown in FIG. 8, the neighbor report element includes the following elements: element identifier (element ID), length (length), BSS identifier (BSSID), BSSID information (info), operating class (operating class), channel number (channel number), physical layer type (PHY type), and optional sub-element (optional sub-element), for example, basic multi-link sub-element (basic multi-link sub-element).

The BSSID field indicates a BSSID corresponding to a reported neighboring AP. The BSSID information field indicates related information of a reported BSSID. The operating class field and the channel number field indicate a channel to which the reported BSSID belongs. The PHY type field indicates a physical layer type of an AP corresponding to the reported BSSID.

Optionally, the BSSID information field may include the following fields: AP reachability (reachability), security (security), key scope (key scope), capabilities (capabilities), mobility domain (mobility domain), high throughput (high throughput), very high throughput (very high throughput), fine timing measurement (fine timing measurement, FTM), high efficiency (high efficiency), extended range BSS (extended range BSS, ER BSS), collocated AP (collocated AP), unsolicited probe response active (unsolicited probe response active), member of extended service set with 2.4/5 GHz collocated AP (member of extended service set with 2.4/5 GHz collocated AP), on-channel tunneling (On-channel tunneling, OCT) supported with reporting AP (OCT supported with reporting AP), collocated with 6 GHz AP (collocated with 6 GHz AP), and reserved field.

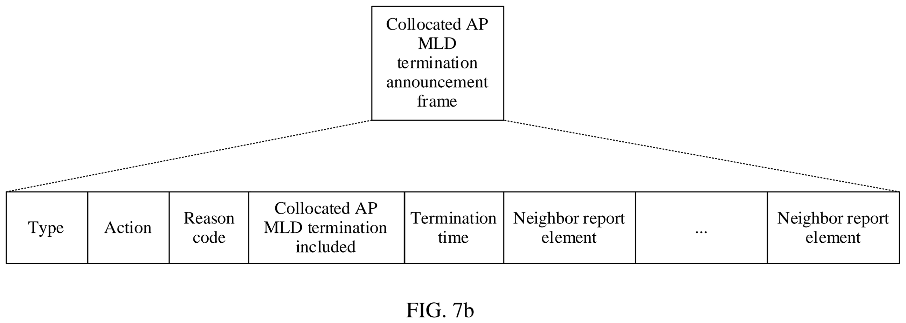

For example, as shown in FIG. 7b, when the first AP MLD is a collocated AP MLD, the first communication frame may include one or more of a category (category), an action (action), a reason code (reason code), a collocated AP MLD termination included field, a termination time (termination time), one or more neighbor report elements, and a collocated AP MLD MAC address. The reason code may indicate a termination reason of the collocated AP MLD. For example, the reason code may be set to a newly defined reason code, to indicate collocated AP MLD termination or collocated AP MLD maintenance. For example, when the reason code is set to a third value, the reason code indicates collocated AP MLD termination. When the reason code is set to a fourth value, the reason code indicates collocated AP MLD maintenance. The collocated AP MLD termination included indicates whether the collocated AP MLD is terminated. The termination time indicates a termination time of the collocated AP MLD. The one or more neighbor report elements include information about a neighboring AP of an affiliated AP affiliated with the collocated AP MLD, to recommend an optional neighbor of BSS transition to a non-AP MLD associated with the collocated AP MLD.

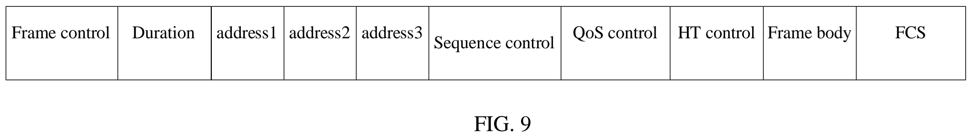

FIG. 9 is a diagram of a frame format according to an embodiment of this application. As shown in FIG. 9, an MPDU may include one or more of the following fields: frame control (frame control), duration (duration), address 1 (address1), address2 (address2), address3 (address3), sequence control (sequence control), quality of service (Quality of Service, QoS) control (QoS Control), high throughput control (high throughput control, HT Control), frame body (frame body), and frame check sequence (frame check sequence, FCS). The address1 field indicates a receiver address (receiver address, RA). The address2 indicates a transmitter address (transmitter address, TA). The address3 indicates a BSSID of a current BSS, that is, an address of an affiliated AP (which is an AP in an AP MLD). For a management frame, the address3 may be used for frame filtering. For example, the address3 of the frame sent by the AP is set to a BSSID corresponding to the AP. The STA may learn, based on the address3, whether the frame belongs to this BSS, and if not, discard the frame.

Termination of a non-collocated AP MLD causes a non-AP MLD associated with the non-collocated AP MLD to perform BSS transition. Therefore, an embodiment of this application further provides a multi-link communication method, to indicate a non-AP MLD associated with a non-collocated AP MLD to perform BSS transition.

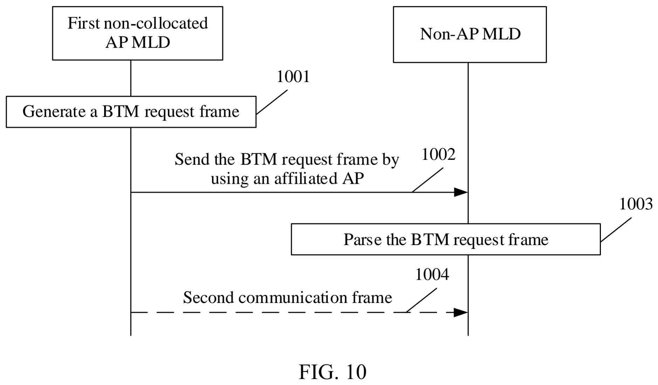

FIG. 10 is a diagram of interaction of another multi-link communication method according to an embodiment of this application. As shown in FIG. 10, for descriptions of a non-collocated AP MLD, a collocated AP MLD, a non-AP MLD, and the like in the method, refer to the foregoing descriptions. Details are not described in the method shown in FIG. 10. It may be understood that, although a relay node is not involved in the method shown below, a person skilled in the art may learn that, when a receiving party and a sending party communicate with each other, a forwarding operation may be performed by using the relay node. As shown in FIG. 10, the method includes the following steps.

1001: A first non-collocated AP MLD generates a BTM request frame, where the BTM request frame includes identification information of a second AP MLD.

For example, the second AP MLD and the first non-collocated AP MLD are different AP MLDs. For example, the second AP MLD may be a neighboring non-collocated AP MLD of the first non-collocated AP MLD or a collocated AP MLD. When the first non-collocated AP MLD needs to be terminated, the first non-collocated AP MLD may generate the BTM request frame, and include the identification information of the second AP MLD in the BTM request frame, to indicate a non-AP MLD (for example, a UHR non-AP MLD) associated with the first non-collocated AP MLD to be transited to the second AP MLD. It should be noted that BTM request frames sent by different affiliated APs may carry different information about the second AP MLD.

It may be understood that the BTM request frame may alternatively be generated by a collocated AP MLD affiliated with the first non-collocated AP MLD, or may be generated by an affiliated AP of a collocated AP MLD affiliated with the first non-collocated AP MLD. This is not limited in this application.

It may be understood that the BTM request frame shown in this embodiment of this application is merely an example. In another possible implementation, a new UHR action frame is defined to indicate the UHR non-AP MLD to perform BSS transition. For ease of description, in this embodiment of this application, the BTM request frame is used as an example to describe the method provided in this embodiment of this application.

In a possible implementation, an address information field of the BTM request frame includes identification information of the first non-collocated AP MLD. For example, the identification information of the first non-collocated AP MLD may include a MAC address of the first non-collocated AP MLD, and the address information field of the BTM request frame may include an address1 field, an address2 field, and an address3 field. The address1 of the BTM request frame may be set to a broadcast address, and the address3 of the BTM frame is set to the MAC address of the first non-collocated AP MLD. For the non-AP MLD (for example, the UHR non-AP MLD) associated with the first non-collocated AP MLD, after receiving the BTM request frame, the UHR non-AP MLD performs BSS transition based on the BTM request frame. For a pre-EHT STA and an EHT non-AP MLD, because the address3 of the BTM frame is not an identifier of a corresponding BSS, the pre-EHT STA and the EHT non-AP MLD discard the BTM request frame after receiving the broadcast BTM request frame.

It may be understood that, in this embodiment of this application, a UHR non-AP MLD associated with a non-collocated AP MLD may receive a management frame in which the address3 is set to a BSSID of a corresponding link, or may receive a management frame in which the address3 is set to a MAC address of the non-collocated AP MLD.

In this implementation, the first non-collocated AP MLD includes the identification information of the first non-collocated AP MLD in the address3 of the BTM request frame, to indicate the UHR non-AP MLD associated with the first non-collocated AP MLD to perform BSS transition.

It may be understood that, when a collocated AP MLD is terminated but an affiliated AP is not terminated, the collocated AP MLD may also set the address3 of the BTM request frame to identification information of the collocated AP MLD, and broadcast the BTM request frame by using the affiliated AP of the collocated AP MLD, to indicate a non-AP MLD (for example, an EHT non-AP MLD) associated with the collocated AP MLD to perform BSS transition. In this case, the EHT non-AP MLD performs BSS transition after receiving the BTM request frame, and a pre-EHT STA and a UHR non-AP MLD discard the BTM request frame after receiving the BTM request frame.

For example, the BTM request frame further includes at least one of the following: BSS termination included information, link removal information, and link transition information, where the BSS termination included information indicates whether a BSS associated with the first non-collocated AP MLD is terminated, the link removal information indicates whether to remove a link associated with the first non-collocated AP MLD (that is, a link on which the BTM frame is received), and the link transition information indicates whether to perform transition between different collocated AP MLDs affiliated with the first non-collocated AP MLD.

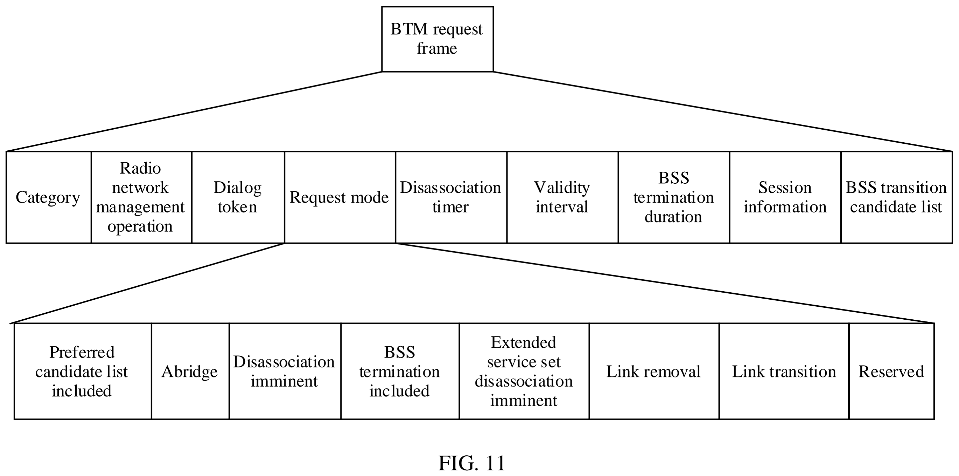

FIG. 11 is a diagram of a BTM request frame according to an embodiment of this application. The BTM frame may include at least one of the following: category, radio network management operation, dialog token, request mode (request mode), disassociation timer (disassociation timer), validity interval (validity interval), BSS termination duration (BSS termination duration), session information (session info), and BSS transition candidate list. The BSS transition candidate list is optional. The request mode may include at least one of the following: preferred candidate list included (preferred candidate list included), abridge (abridge), disassociation imminent (disassociation imminent), BSS termination included (BSS termination included), extended service set (extended service set, ESS) disassociation imminent (ESS disassociation imminent), link removal (link removal), and link transition (link transition). The BSS termination included field indicates whether a BSS is disabled. For one UHR non-AP MLD, the BSS termination included field has the following meanings, for example, may indicate whether a BSS of an affiliated AP (for example, an AP that sends the BTM request frame) is terminated, or may indicate whether all BSSs of a collocated AP MLD are terminated, or may indicate whether all BSSs of a non-collocated AP MLD are terminated. The link removal information indicates whether to remove a link (for example, a link on which the BTM request frame is received). Therefore, in a UHR system, the link transition information, the BSS termination included information, and the link removal information may indicate whether to perform BSS transition between different non-collocated AP MLDs or link transition between different collocated AP MLDs in a same non-collocated AP MLD.

For example, when the first non-collocated AP MLD is terminated, the first non-collocated AP MLD needs to send, in a broadcast manner, the BTM request frame on all links of all collocated AP MLDs affiliated with the first non-collocated AP MLD. In this case, the BSS termination included field is set to 1, the link removal field is set to 0, and the link transition field is set to 0. After receiving the BTM frame, the UHR non-AP MLD performs BSS transition. After receiving the BTM request frame, the pre-EHT STA and the EHT non-AP MLD discard the BTM request frame, and do not perform BSS transition.

1002: The first non-collocated AP MLD sends the BTM request frame by using an affiliated AP, and correspondingly the non-AP MLD receives the BTM request frame.

It may be understood that, in this embodiment of this application, the BTM request frame may alternatively be generated by the affiliated AP, or the BTM request frame is generated by the collocated AP MLD affiliated with the first non-collocated AP MLD. For example, when the first non-collocated AP MLD needs to be terminated, the first non-collocated AP MLD may send an instruction to the collocated AP MLD affiliated with the first non-collocated AP MLD or the affiliated AP, so that the collocated AP MLD or the affiliated AP generates the BTM request frame.

1003: The non-AP MLD parses the BTM request frame.

For example, the non-AP MLD may perform BSS transition based on the BTM request frame. For example, the non-AP MLD may be transited to a second non-collocated AP MLD based on the BTM request frame.

For example, the non-AP MLD may further send a BTM response frame by using an affiliated STA of the non-AP MLD. The BTM response frame may be generated by the STA, or may be generated by the non-AP MLD with which the STA is affiliated.

In an implementation, the multi-link communication method shown in FIG. 10 may further include step 1004.

1004: The first non-collocated AP MLD sends a second communication frame by using an affiliated AP, and correspondingly the non-AP MLD receives the second communication frame by using a STA. The second communication frame includes a reduced neighbor report (reduced neighbor report, RNR) element, and the reduced neighbor report element includes information about at least one affiliated AP of a neighboring collocated AP MLD affiliated with the first non-collocated AP MLD.

For example, the second communication frame may be a beacon frame or a newly defined broadcast frame. The affiliated AP may be affiliated with a third collocated AP MLD, and the third collocated AP MLD is affiliated with the first non-collocated AP MLD. The at least one affiliated AP is affiliated with a collocated AP MLD that is in the first non-collocated AP MLD and that is adjacent to the third collocated AP MLD, that is, the affiliated AP that sends the second communication frame and the at least one affiliated AP are affiliated with different collocated AP MLDs in a same non-collocated AP MLD. The first non-collocated AP MLD may indicate all affiliated APs of the third collocated AP MLD to broadcast the second communication frame, where the second communication frame includes the RNR element, and the RNR element carries the information about the at least one affiliated AP of the collocated AP MLD that is adjacent to the third collocated AP MLD and that is affiliated with the first non-collocated AP MLD.

After receiving the second communication frame, the non-AP MLD may obtain information about the neighboring collocated AP MLD based on the second communication frame.

It may be understood that the method shown in FIG. 5 may be combined with the method shown in FIG. 10. For example, when a non-collocated AP MLD needs to be terminated, the non-collocated AP MLD may use a first communication frame to indicate a termination time of the non-collocated AP MLD and an optional neighbor report sub-element, and/or send a BTM request frame to indicate a non-AP MLD associated with the non-collocated AP MLD to perform BSS transition.

One UHR non-AP MLD may select to be associated with a collocated AP MLD or one non-collocated AP MLD. When a non-collocated AP MLD or a collocated AP MLD associated with a UHR non-AP MLD is terminated, the UHR non-AP MLD may be transited to a neighboring non-collocated AP MLD or a neighboring collocated AP MLD. Generally, the non-AP MLD needs to query a current non-collocated AP MLD or collocated AP MLD to obtain related information of the neighboring collocated AP MLD or perform channel scanning, so as to select to be transited to the neighboring collocated AP MLD. Therefore, an embodiment of this application further provides a multi-link communication method, to provide related information of a neighboring collocated AP MLD for a UHR non-AP MLD.

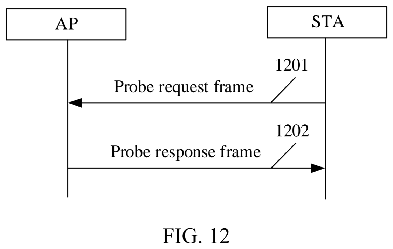

FIG. 12 is a diagram of interaction of still another multi-link communication method according to an embodiment of this application. As shown in FIG. 12, for descriptions of a non-collocated AP MLD, a collocated AP MLD, a non-AP MLD, and the like in the method, refer to the foregoing descriptions. Details are not described in the method shown in FIG. 12. It may be understood that, although a relay node is not involved in the method shown below, a person skilled in the art may learn that, when a receiving party and a sending party communicate with each other, a forwarding operation may be performed by using the relay node. As shown in FIG. 12, the method includes the following steps.

1201: A STA sends a probe request frame, and correspondingly an AP receives the probe request frame.

The probe request frame includes identification information of a first collocated AP MLD and second indication information, and the first collocated AP MLD is affiliated with a third non-collocated AP MLD. The second indication information indicates a probe scope of the probe request. For example, the second indication information indicates to probe the first collocated AP MLD. Alternatively, the second indication information indicates to probe a collocated AP MLD that is affiliated with the third non-collocated AP MLD and that is adjacent to the first collocated AP MLD. Alternatively, the second indication information indicates to probe the first collocated AP MLD and a collocated AP MLD that is affiliated with the third non-collocated AP MLD and that is adjacent to the first collocated AP MLD. Alternatively, the second indication information indicates to probe a collocated AP MLD affiliated with the third non-collocated AP MLD.

For example, the STA is a STA affiliated with a non-AP MLD. For example, a UHR non-AP MLD sends the probe request frame by using the STA. The AP is affiliated with the first collocated AP MLD or the AP is affiliated with a collocated AP MLD of the third non-collocated AP MLD.

For example, the probe request frame may be a newly defined probe request frame. For example, the probe request frame may be referred to as a protected probe action frame (protected probe action frame), and is used to probe information about a given collocated AP MLD and a collocated AP MLD that is adjacent to the given collocated AP MLD and that is affiliated with a same non-collocated AP MLD.

For example, the probe request frame may further include at least one of identification information of the third non-collocated AP MLD and a service set identifier (service set identifier, SSID).

For example, the probe request frame includes at least one of a category (category), an action (action), an SSID, and one or more probe request multi-link elements (probe request multi-link element).

For example, the probe request multi-link element may include a probe scope (probe scope) field, and the probe scope carries the second indication information indicating the probe scope of the probe request frame. For example, if the probe scope field is set to x1, it indicates that the probe request frame is used to probe information about the first collocated AP MLD. For another example, if the probe scope field is set to x2, it indicates that the probe request frame is used to probe information about the first collocated AP MLD and a collocated AP MLD that is adjacent to the first collocated AP MLD and that is affiliated with a same non-collocated AP MLD (that is, the third non-collocated AP MLD). For another example, if the probe scope field is set to x3, it indicates that the probe request frame is used to probe information about a collocated AP MLD that is adjacent to the first collocated AP MLD and that is affiliated with the third non-collocated AP MLD. For another example, if the probe scope field is set to x4, it indicates that the probe request frame is used to probe information about the entire third non-collocated AP MLD (that is, probe all AP MLDs affiliated with the third non-collocated AP MLD).

It may be understood that x1, x2, x3, and x4 indicate different values of the probe scope field, that is, x1, x2, x3, and x4 may be understood as different values. For example, x1 may be 0, x2 may be 1, x3 may be 2, and x4 may be 3; or x1, x2, x3, and x4 may be other values. Values of x1, x2, x3, and x4 are not limited in this application.

For example, the probe request multi-link element further includes a non-collocated AP MLD MAC address field, and the identification information of the third non-collocated AP MLD is carried in the non-collocated AP MLD MAC address field.

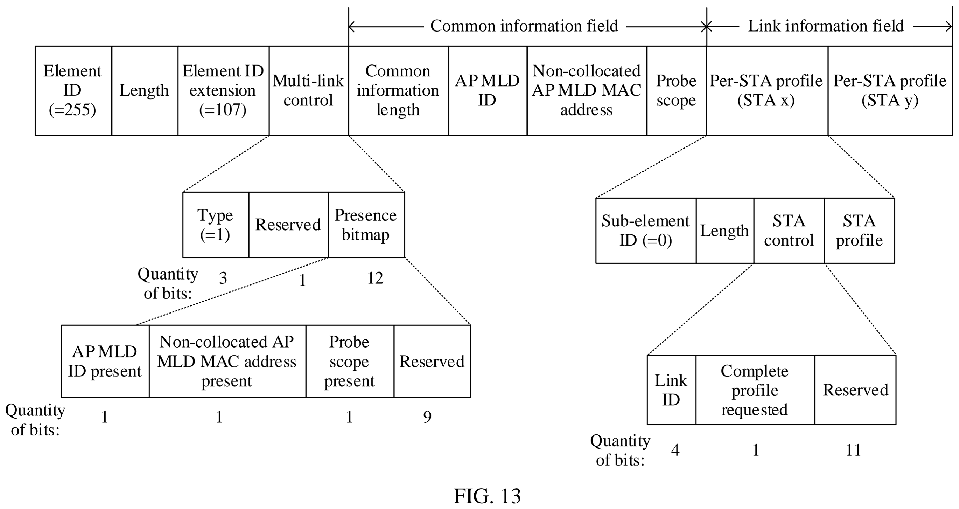

FIG. 13 is a diagram of a probe request multi-link element according to an embodiment of this application. As shown in FIG. 13, the probe request multi-link element includes at least one of an element ID (element ID) (for example, element ID=255), a length (length), an element ID extension (element ID extension) (for example, element ID extension=107), a multi-link control field, a common information field (common info field), and a link information field (link info field). For example, the multi-link control field may include a type (type) (for example, type=1), a reserved (reserved) field, and a presence bitmap. For example, the type may include 3 bits, and the reserved field may include 1 bit. The presence bitmap may include 12 bits, and indicates whether related information in the common information field is present. For example, 1 bit in the presence bitmap indicates whether an AP MLD ID field is present, 1 bit in the presence bitmap indicates whether the non-collocated AP MLD MAC address field is present, and 1 bit in the presence bitmap indicates whether the probe scope field is present.

For example, the common information field may include a common information length (common info length) field and at least one of an MLD MAC address field (used to carry a MAC address of the first collocated AP MLD), the non-collocated AP MLD MAC address field, and the probe scope field. For example, the link information field may further include one or more per-STA profile (per-STA profile) fields, and the per-STA profile field may include a sub-element ID (sub-element ID) (for example, sub-element ID=0), a length, a STA control (STA control) field, and a STA information (STA info) field. The STA control field includes a link ID (link ID) field, a complete profile requested (complete profile requested) field, and a reserved field. For example, the link ID field may include 4 bits, the complete profile requested field may include 1 bit, and the reserved field includes 11 bits.

1202: The AP sends a probe response frame, and correspondingly the STA receives the probe response frame.

For example, after receiving the probe request frame, the third non-collocated AP MLD may send the probe response frame by using one affiliated AP of one affiliated collocated AP MLD.

For example, the probe response frame includes a probe result of the probe request frame. For example, when the second indication information indicates to probe the first collocated AP MLD, the probe response frame includes the information about the first collocated AP MLD. When the second indication information indicates to probe a collocated AP MLD that is affiliated with the third non-collocated AP MLD and that is adjacent to the first collocated AP MLD, the probe response frame includes information about one or more collocated AP MLDs that are adjacent to the first collocated AP MLD and that are affiliated with the third non-collocated AP MLD. When the second indication information indicates to probe the first collocated AP MLD and a collocated AP MLD that is affiliated with the third non-collocated AP MLD and that is adjacent to the first collocated AP MLD, the probe response frame includes the information about the first collocated AP MLD and information about one or more collocated AP MLDs that are adjacent to the first collocated AP MLD and that are affiliated with the third non-collocated AP MLD. When the second indication information indicates to probe a collocated AP MLD affiliated with the third non-collocated AP MLD, the probe response frame may include information about one or more collocated AP MLDs affiliated with the third non-collocated AP MLD.

In a possible implementation, when the second indication information indicates to probe a collocated AP MLD affiliated with the third non-collocated AP MLD, the probe response frame includes third indication information, and the third indication information indicates a quantity of collocated AP MLDs affiliated with the third non-collocated AP MLD.

When the third non-collocated AP MLD includes many affiliated collocated AP MLDs, if the probe response frame includes information about all collocated AP MLDs affiliated with the third non-collocated AP MLD, signaling overheads are high. In this case, the probe response frame may include statistics information about the third non-collocated AP MLD, and does not need to carry the information about all the collocated AP MLDs affiliated with the third non-collocated AP MLD, so that signaling overheads can be reduced. For example, the probe response frame may include the quantity of collocated AP MLDs affiliated with the third non-collocated AP MLD.

In this embodiment of this application, the non-AP MLD includes, in the probe request frame sent by the STA, the second indication information indicating the probe scope, so that the non-AP MLD can probe, by using the second indication information, information about a collocated AP MLD adjacent to the first collocated AP MLD.

In a possible implementation, the probe request frame may include the SSID, and does not include the identification information of the first collocated AP MLD and the second indication information. In this implementation, by using the SSID included in the probe request frame that is broadcast by the STA, the non-AP MLD may receive the probe response frame that has the same SSID as the probe request frame and that is replied with by an AP, where the probe response frame includes information about the AP and information about a collocated AP MLD with which the AP is affiliated. The non-AP MLD may obtain information about one or more neighboring collocated AP MLDs by using one or more received probe response frames.

In this implementation, the probe request frame sent by the non-AP MLD needs to carry only the SSID, so that signaling overheads can be reduced.

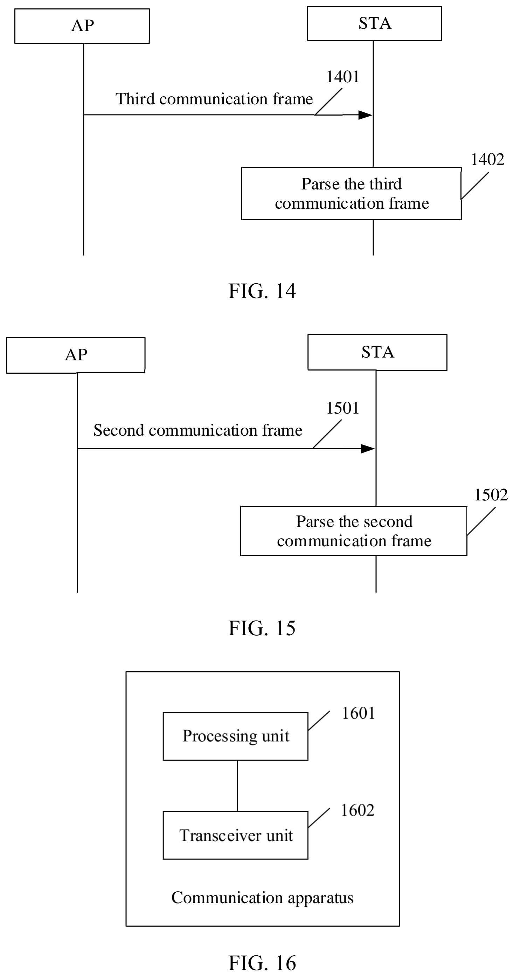

FIG. 14 is a diagram of interaction of still another multi-link communication method according to an embodiment of this application. As shown in FIG. 14, for descriptions of a non-collocated AP MLD, a collocated AP MLD, a non-AP MLD, and the like in the method, refer to the foregoing descriptions. Details are not described in the method shown in FIG. 14. It may be understood that, although a relay node is not involved in the method shown below, a person skilled in the art may learn that, when a receiving party and a sending party communicate with each other, a forwarding operation may be performed by using the relay node. As shown in FIG. 14, the method includes the following steps.

1401: An AP sends a third communication frame, and correspondingly a STA receives the third communication frame. The third communication frame may include fourth indication information, and the fourth indication information indicates a second collocated AP MLD to be removed from a fourth non-collocated AP MLD, or the fourth indication information indicates a second collocated AP MLD to be transited from a fourth non-collocated AP MLD to a fifth non-collocated AP MLD.

For example, the AP is affiliated with the second collocated AP MLD, and the second collocated AP MLD is affiliated with the fourth non-collocated AP MLD. The fifth non-collocated AP MLD and the fourth non-collocated AP MLD are two different non-collocated AP MLDs. For example, the fifth non-collocated AP MLD may be a neighboring non-collocated AP MLD of the fourth AP MLD.

For example, the third communication frame may be generated by the AP, or may be generated by the second collocated AP MLD. When the second collocated AP MLD needs to be removed from the fourth non-collocated AP MLD, or the second collocated AP MLD needs to be transited from the fourth non-collocated AP MLD to the fifth non-collocated AP MLD, the AP sends the third communication frame, to indicate a non-AP MLD associated with the second collocated AP MLD to perform BSS transition or indicate a non-AP MLD associated with the fourth non-collocated AP MLD to perform link transition.

For example, the third communication frame may further include or may separately include fifth indication information, and the fifth indication information indicates a time of removing the second collocated AP MLD from the fourth non-collocated AP MLD, or the fifth indication information indicates a time of transiting the second collocated AP MLD from the fourth non-collocated AP MLD to the fifth non-collocated AP MLD. In other words, the fourth indication information and the fifth indication information in the third communication frame indicate the second collocated AP MLD to be removed from the fourth non-collocated AP MLD, and indicate the time of removing the second collocated AP MLD from the fourth non-collocated AP MLD. Alternatively, the fourth indication information and the fifth indication information in the third communication frame indicate the second collocated AP MLD to be transited from the fourth non-collocated AP MLD to the fifth non-collocated AP MLD, and indicate the time of transiting the second collocated AP MLD from the fourth non-collocated AP MLD to the fifth non-collocated AP MLD.

For example, the fifth indication information includes second duration, and the second duration indicates that the second collocated AP MLD is removed from the fourth non-collocated AP MLD after the second duration. Alternatively, the second duration indicates that the second collocated AP MLD is transited from the fourth non-collocated AP MLD to the fifth non-collocated AP MLD after the second duration. For example, a unit of the second duration is a TU.

1402: The STA parses the third communication frame.

For example, the STA is affiliated with a non-AP MLD. After receiving the third communication frame, a UHR non-AP MLD associated with the fourth non-collocated AP MLD may perform link transition. For example, the UHR non-AP MLD may transit a link between the UHR non-AP MLD and the second collocated AP MLD to another neighboring collocated AP MLD affiliated with the fourth non-collocated AP MLD. Alternatively, after receiving the third communication frame, the UHR non-AP MLD may perform BSS transition. For example, the UHR non-AP MLD may transit a BSS to a neighboring AP MLD.

In a possible implementation, the non-AP MLD may determine, based on a transmitter address of the third communication frame, the AP that sends the third communication frame, to determine the second collocated AP MLD with which the AP is affiliated and the fourth non-collocated AP MLD with which the second collocated AP MLD is affiliated.

In another possible implementation, the third communication frame further includes identification information of the second collocated AP MLD and identification information of the fourth non-collocated AP MLD. The non-AP MLD may determine the second collocated AP MLD and the fourth non-collocated AP MLD based on the identification information of the second collocated AP MLD and the identification information of the fourth non-collocated AP MLD.

In this embodiment of this application, the fourth indication information may indicate the second collocated AP MLD to be removed from the fourth non-collocated AP MLD or indicate the second collocated AP MLD to be transited from the fourth non-collocated AP MLD to the fifth non-collocated AP MLD, so that the non-AP MLD associated with the second collocated AP MLD or the fourth non-collocated AP MLD can perform BSS transition or link transition in time.

In a possible implementation, the fourth indication information indicates the second collocated AP MLD to be terminated, and the fifth indication information indicates a termination time of the second collocated AP MLD. Alternatively, the fourth indication information indicates the fourth non-collocated AP MLD to be terminated, and the fifth indication information indicates a termination time of the fourth non-collocated AP MLD. Alternatively, the fourth indication information indicates the second collocated AP MLD to be removed from the fourth non-collocated AP MLD, and the fifth indication information indicates the time of removing the second collocated AP MLD from the fourth non-collocated AP MLD. Alternatively, the fourth indication information indicates the second collocated AP MLD to be transited from the fourth non-collocated AP MLD to the fifth non-collocated AP MLD, and the fifth indication information indicates the time of transiting the second collocated AP MLD from the fourth non-collocated AP MLD to the fifth non-collocated AP MLD.

For example, the third communication frame may be a beacon frame, and the fourth indication information and the fifth indication information may be included in a reconfiguration multi-link element of the third communication frame. For example, the reconfiguration multi-link element may include a reconfiguration type (reconfiguration type) field and a reconfiguration timer (reconfiguration timer) field. The reconfiguration type field indicates a reconfiguration type, and the reconfiguration type includes any one of the following: termination of a non-collocated AP MLD, termination of a collocated AP MLD, removal of a collocated AP MLD from a non-collocated AP MLD, and transition of a collocated AP MLD from a current non-collocated AP MLD to a new non-collocated AP MLD. The reconfiguration timer field indicates how long after an event corresponding to the reconfiguration type occurs. In other words, the fourth indication information is carried in the reconfiguration type field, and the fifth indication information is carried in the reconfiguration timer field.

For example, if the reconfiguration type field is set to y1, it indicates that a collocated AP MLD is to be terminated; if the reconfiguration type field is set to y2, it indicates that a non-collocated AP MLD is to be terminated; if the reconfiguration type field is set to y3, it indicates that a collocated AP MLD is to be removed from a current non-collocated AP MLD, that is, the collocated AP MLD is no longer affiliated with any non-collocated AP MLD after this; and if the reconfiguration type field is set to y4, it indicates that a collocated AP MLD is to be transited from a current non-collocated AP MLD to a new non-collocated AP MLD.

It may be understood that y1, y2, y3, and y4 indicate different values of the reconfiguration type field, that is, y1, y2, y3, and y4 may be understood as different values. For example, the reconfiguration type field includes 2 bits, where y1 may be 0, y2 may be 1, y3 may be 2, and y4 may be 3; or y1, y2, y3, and y4 may be other values. Values of y1, y2, y3, and y4 are not limited in this application.

It may be understood that both removal of a collocated AP MLD from a non-collocated AP MLD and transition of a collocated AP MLD from a current non-collocated AP MLD to a new non-collocated AP MLD cause a non-AP MLD associated with the current non-collocated AP MLD to perform BSS transition. Therefore, y3 and y4 may be a same value, that is, when a collocated AP MLD is to be removed from a current non-collocated AP MLD or a collocated AP MLD is to be transited from a current non-collocated AP MLD to a new non-collocated AP MLD, the reconfiguration type field may be set to y3, to indicate a non-AP MLD associated with the current non-collocated AP MLD to perform BSS transition.

It may be understood that the fields included in the reconfiguration multi-link element may be shown in FIG. 6a or FIG. 6b. For specific descriptions of the reconfiguration multi-link element, refer to the foregoing related descriptions or a related standard or protocol. Details are not described herein again.

FIG. 15 is a diagram of interaction of still another multi-link communication method according to an embodiment of this application. As shown in FIG. 15, for descriptions of a non-collocated AP MLD, a collocated AP MLD, a non-AP MLD, and the like in the method, refer to the foregoing descriptions. Details are not described in the method shown in FIG. 15. It may be understood that, although a relay node is not involved in the method shown below, a person skilled in the art may learn that, when a receiving party and a sending party communicate with each other, a forwarding operation may be performed by using the relay node. As shown in FIG. 15, the method includes the following steps.

1501: An AP sends a second communication frame, and correspondingly a STA receives the second communication frame. The second communication frame includes a reduced neighbor report element, and the reduced neighbor report element includes information about at least one affiliated AP of a collocated AP MLD affiliated with a non-collocated AP MLD.

For example, the AP is an affiliated AP of a collocated AP MLD affiliated with a non-collocated AP MLD. The second communication frame may be a beacon frame or a newly defined broadcast frame. Each affiliated AP of the collocated AP MLD includes a reduced neighbor report element in the second communication frame, where the reduced neighbor report element includes information about at least one affiliated AP of a collocated AP MLD that is adjacent to the collocated AP MLD and that is affiliated with a same non-collocated AP MLD as the collocated AP MLD.

1502: The STA parses the second communication frame.

For example, the STA is affiliated with a non-AP MLD. After receiving the second communication frame, the non-AP MLD may determine, based on the second communication frame, the information about the at least one affiliated AP and information about the collocated AP MLD with which the at least one affiliated AP is affiliated.

In this embodiment of this application, the collocated AP MLD includes, in the second communication frame that is broadcast by the affiliated AP, the information about the collocated AP MLD that is adjacent to the collocated AP MLD and that is affiliated with the same non-collocated AP MLD, so that the non-AP MLD can obtain the information about the neighboring collocated AP MLD without performing channel scanning.

It may be understood that the methods provided in embodiments of this application may be combined with each other, and a combination sequence may be determined based on specific implementation. Embodiments of this application are not enumerated. For example, the methods shown in at least two of FIG. 5, FIG. 10, FIG. 12, FIG. 14, and FIG. 15 are combined. To be specific, when a non-collocated AP MLD needs to be terminated, the method shown in FIG. 5 may be used to indicate that the non-collocated AP MLD is to be terminated, the method shown in FIG. 10 may be used to indicate a non-AP MLD associated with the non-collocated AP MLD to perform BSS transition, and the non-AP MLD may obtain information about a neighboring collocated AP MLD by using the method shown in FIG. 12 or FIG. 15, and perform BSS transition based on the information about the neighboring collocated AP MLD.

A communication apparatus provided in an embodiment of this application is described below.

In this application, the communication apparatus is divided into functional modules based on the foregoing method embodiment. For example, each functional module corresponding to each function may be obtained through division, or two or more functions may be integrated into one processing module. The integrated module may be implemented in a form of hardware, or may be implemented in a form of a software functional module. It should be noted that, in this application, module division is an example, and is merely a logical function division. During actual implementation, there may be another division manner. The following describes in detail communication apparatuses in embodiments of this application with reference to FIG. 16 to FIG. 18.

FIG. 16 is a diagram of a structure of a communication apparatus according to an embodiment of this application. As shown in FIG. 16, the communication apparatus includes a processing unit 1601 and a transceiver unit 1602. The transceiver unit 1602 may implement a corresponding communication function, and the processing unit 1601 is configured to perform data processing. For example, the transceiver unit 1602 may also be referred to as a communication interface, a communication unit, or the like.

In some embodiments of this application, the communication apparatus may be configured to perform actions performed by the AP in the foregoing method embodiment. In this case, the communication apparatus may be the AP or a component (such as a chip or a system) that may be configured in the AP, the transceiver unit 1602 is configured to perform operations related to receiving and sending of the AP in the foregoing method embodiment, and the processing unit 1601 is configured to perform operations related to processing of the AP in the foregoing method embodiment.

For example, the processing unit 1601 is configured to determine a first communication frame; and the transceiver unit 1602 is configured to output the first communication frame.

It may be understood that the transceiver unit 1602 may send the first communication frame to a STA, or the transceiver unit 1602 outputs the first communication frame from the processing unit 1601 to another component in the AP. Related descriptions of outputting another frame by the transceiver unit are similar. Details are not described below again.

In some other embodiments of this application, the communication apparatus may be configured to perform actions performed by the STA in the foregoing method embodiment. In this case, the communication apparatus may be the STA or a component (such as a chip or a system) that may be configured in the STA, the transceiver unit 1602 is configured to perform operations related to receiving and sending of the STA in the foregoing method embodiment, and the processing unit 1601 is configured to perform operations related to processing of the STA in the foregoing method embodiment.

The transceiver unit 1602 is configured to input a first communication frame; and the processing unit 1601 is configured to parse the first communication frame.

It may be understood that, for specific descriptions of parsing the communication frame by the processing unit 1601, refer to the foregoing method embodiment. Details are not described herein again.

In still some embodiments of this application, the communication apparatus may be configured to perform actions performed by the first non-collocated AP MLD in the foregoing method embodiment. In this case, the communication apparatus may be the first non-collocated AP MLD or a component (such as a chip or a system) that may be configured in the first non-collocated AP MLD, the transceiver unit 1602 is configured to perform operations related to receiving and sending of the first non-collocated AP MLD in the foregoing method embodiment, and the processing unit 1601 is configured to perform operations related to processing of the first non-collocated AP MLD in the foregoing method embodiment.

For example, the processing unit 1601 is configured to generate a BTM request frame; and the transceiver unit 1602 is configured to output the BTM request frame.

It may be understood that the transceiver unit 1602 may send the BTM request frame to a non-AP MLD, or the transceiver unit 1602 outputs the BTM request frame from the processing unit 1601 to an affiliated AP of the AP MLD.

For example, the transceiver unit 1602 is further configured to output a second communication frame.

In still some embodiments of this application, the communication apparatus may be configured to perform actions performed by the non-AP MLD in the foregoing method embodiment. In this case, the communication apparatus may be the non-AP MLD or a component that may be configured in the non-AP MLD, the transceiver unit 1602 is configured to perform operations related to receiving and sending of the non-AP MLD in the foregoing method embodiment, and the processing unit 1601 is configured to perform operations related to processing of the non-AP MLD in the foregoing method embodiment.

The transceiver unit 1602 is configured to input a BTM request frame; and the processing unit 1601 is configured to parse the BTM request frame.

For example, the transceiver unit 1602 is further configured to input a second communication frame.

In still some embodiments of this application, the communication apparatus may be configured to perform actions performed by the AP in the foregoing method embodiment. In this case, the communication apparatus may be the AP or a component (such as a chip or a system) that may be configured in the AP, the transceiver unit 1602 is configured to perform operations related to receiving and sending of the AP in the foregoing method embodiment, and the processing unit 1601 is configured to perform operations related to processing of the AP in the foregoing method embodiment.

For example, the transceiver unit 1602 is configured to input a probe request frame, and output a probe response frame.

It may be understood that the transceiver unit 1602 may send the probe response frame to a STA, or the transceiver unit 1602 outputs the probe response frame from the processing unit 1601 to another component in the AP. Related descriptions of outputting another frame by the transceiver unit are similar. Details are not described below again.

In still some embodiments of this application, the communication apparatus may be configured to perform actions performed by the STA in the foregoing method embodiment. In this case, the communication apparatus may be the STA or a component (such as a chip or a system) that may be configured in the STA, the transceiver unit 1602 is configured to perform operations related to receiving and sending of the STA in the foregoing method embodiment, and the processing unit 1601 is configured to perform operations related to processing of the STA in the foregoing method embodiment.

The transceiver unit 1602 is configured to output a probe request frame, and input a probe response frame.

In still some embodiments of this application, the communication apparatus may be configured to perform actions performed by the AP in the foregoing method embodiment. In this case, the communication apparatus may be the AP or a component (such as a chip or a system) that may be configured in the AP, the transceiver unit 1602 is configured to perform operations related to receiving and sending of the AP in the foregoing method embodiment, and the processing unit 1601 is configured to perform operations related to processing of the AP in the foregoing method embodiment.

For example, the processing unit 1601 is configured to determine a third communication frame; and the transceiver unit 1602 is configured to output the third communication frame.

It may be understood that the transceiver unit 1602 may send the third communication frame to a STA, or the transceiver unit 1602 outputs the third communication frame from the processing unit 1601 to another component in the AP. Related descriptions of outputting another frame by the transceiver unit are similar. Details are not described below again.

In still some embodiments of this application, the communication apparatus may be configured to perform actions performed by the STA in the foregoing method embodiment. In this case, the communication apparatus may be the STA or a component (such as a chip or a system) that may be configured in the STA, the transceiver unit 1602 is configured to perform operations related to receiving and sending of the STA in the foregoing method embodiment, and the processing unit 1601 is configured to perform operations related to processing of the STA in the foregoing method embodiment.

The transceiver unit 1602 is configured to input a third communication frame; and the processing unit 1601 is configured to parse the third communication frame.

In still some embodiments of this application, the communication apparatus may be configured to perform actions performed by the AP in the foregoing method embodiment. In this case, the communication apparatus may be the AP or a component (such as a chip or a system) that may be configured in the AP, the transceiver unit 1602 is configured to perform operations related to receiving and sending of the AP in the foregoing method embodiment, and the processing unit 1601 is configured to perform operations related to processing of the AP in the foregoing method embodiment.

For example, the processing unit 1601 is configured to determine a second communication frame; and the transceiver unit 1602 is configured to output the second communication frame.

It may be understood that the transceiver unit 1602 may send the second communication frame to a STA, or the transceiver unit 1602 outputs the second communication frame from the processing unit 1601 to another component in the AP. Related descriptions of outputting another frame by the transceiver unit are similar. Details are not described below again.

In still some embodiments of this application, the communication apparatus may be configured to perform actions performed by the STA in the foregoing method embodiment. In this case, the communication apparatus may be the STA or a component (such as a chip or a system) that may be configured in the STA, the transceiver unit 1602 is configured to perform operations related to receiving and sending of the STA in the foregoing method embodiment, and the processing unit 1601 is configured to perform operations related to processing of the STA in the foregoing method embodiment.

The transceiver unit 1602 is configured to input a second communication frame; and the processing unit 1601 is configured to parse the second communication frame.

Optionally, the communication apparatus may further include a storage unit. The storage unit may be configured to store instructions and/or data, and the processing unit 1601 may read the instructions and/or the data in the storage unit, so that the communication apparatus implements the foregoing method embodiments.

It may be understood that specific descriptions of the transceiver unit and the processing unit described in embodiments of this application are merely examples. For specific functions, execution steps, or the like of the transceiver unit and the processing unit, refer to the foregoing method embodiments. Details are not described herein again.

In the foregoing embodiments, for descriptions of the first communication frame, the BTM request frame, the probe request frame, the probe response frame, the second communication frame, the third communication frame, and the like, refer to the descriptions in the foregoing method embodiments. Details are not described herein again.

The foregoing describes the communication apparatus in this embodiment of this application. The following describes a possible product form of the communication apparatus. It should be understood that a product in any form having the functions of the communication apparatus described in FIG. 16 falls within the protection scope of embodiments of this application. It should be further understood that the following description is merely an example, and does not limit a product form of the communication apparatus in embodiments of this application.

In a possible implementation, in the communication apparatus shown in FIG. 16, the processing unit 1601 may be one or more processors; and the transceiver unit 1602 may be a transceiver or the transceiver unit 1602 may be a sending unit and a receiving unit, where the sending unit may be a transmitter, the receiving unit may be a receiver, and the sending unit and the receiving unit are integrated into one device, for example, a transceiver. In this embodiment of this application, the processor and the transceiver may be coupled, or the like. A manner of connecting the processor and the transceiver is not limited in embodiments of this application. In a process of performing the foregoing method, a process of sending information in the foregoing method may be understood as a process of outputting the information by the processor. When outputting the information, the processor outputs the information to a transceiver, so that the transceiver transmits the information. After the information is output by the processor, other processing may further need to be performed on the information and then the information arrives at the transceiver. Similarly, a process of receiving information in the foregoing method may be understood as a process of receiving the input information by the processor. When the processor receives the input information, the transceiver receives the information, and inputs the information into the processor. Still further, after the transceiver receives the foregoing information, other processing may need to be performed on the information and then the information is received by the processor.

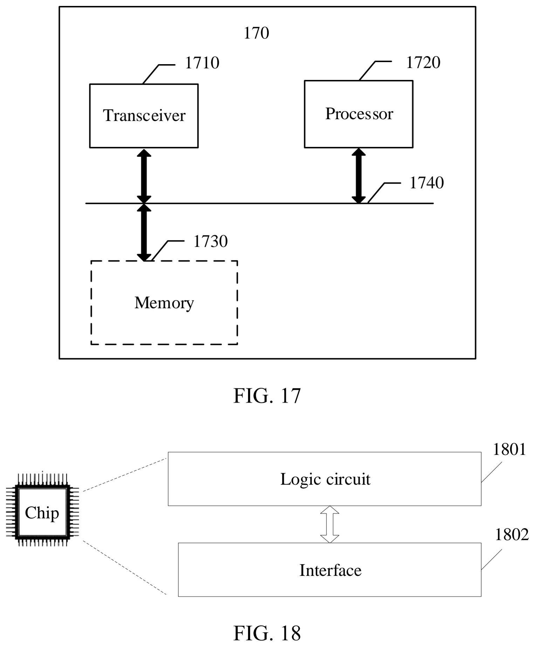

As shown in FIG. 17, a communication apparatus 170 includes one or more processors 1720 and a transceiver 1710.

In some embodiments of this application, the communication apparatus may be configured to perform steps, functions, or the like performed by the AP in the foregoing method embodiment.

The processor 1720 is configured to determine a first communication frame; and the transceiver 1710 is configured to send the first communication frame.

In some other embodiments of this application, the communication apparatus may be configured to perform steps, functions, or the like performed by the STA in the foregoing method embodiment.

The transceiver 1710 is configured to receive a first communication frame; and the processor 1720 is configured to parse the first communication frame.

It may be understood that specific descriptions of the transceiver and the processor described in embodiments of this application are merely examples. For specific functions, execution steps, or the like of the transceiver and the processor, refer to the foregoing method embodiments. Details are not described herein again.

In still some embodiments of this application, the communication apparatus may be a non-collocated AP MLD or a component that may be configured in the non-collocated AP MLD. For example, the processor 1720 may be configured to generate a BTM request frame; and the transceiver 1710 may be configured to send the BTM request frame (for example, send the BTM request frame to an AP).

In still some embodiments of this application, the communication apparatus may be a non-AP MLD or a component that may be configured in the non-AP MLD. For example, the transceiver 1710 may be configured to receive a BTM request frame (for example, receive the BTM request frame from a STA); and the processor 1720 may be configured to parse the BTM request frame.

In still some embodiments of this application, the communication apparatus may be configured to perform steps, functions, or the like performed by the AP in the foregoing method embodiment.

The transceiver 1710 is configured to receive a probe request frame, and send a probe response frame.

In still some embodiments of this application, the communication apparatus may be configured to perform steps, functions, or the like performed by the STA in the foregoing method embodiment.

The transceiver 1710 is configured to send a probe request frame, and receive a probe response frame.

In still some embodiments of this application, the communication apparatus may be configured to perform steps, functions, or the like performed by the AP in the foregoing method embodiment.

The processor 1720 is configured to determine a third communication frame; and the transceiver 1710 is configured to send the third communication frame.

In still some embodiments of this application, the communication apparatus may be configured to perform steps, functions, or the like performed by the STA in the foregoing method embodiment.

The transceiver 1710 is configured to receive a third communication frame; and the processor 1720 is configured to parse the third communication frame.

In still some embodiments of this application, the communication apparatus may be configured to perform steps, functions, or the like performed by the AP in the foregoing method embodiment.

The processor 1720 is configured to determine a second communication frame; and the transceiver 1710 is configured to send the second communication frame.

In still some embodiments of this application, the communication apparatus may be configured to perform steps, functions, or the like performed by the STA in the foregoing method embodiment.

The transceiver 1710 is configured to receive a second communication frame; and the processor 1720 is configured to parse the second communication frame.

In the foregoing embodiments, for descriptions of the first communication frame, the BTM request frame, the probe request frame, the probe response frame, the second communication frame, the third communication frame, and the like, refer to the descriptions in the foregoing method embodiments. Details are not described herein again.

In various implementations of the communication apparatus shown in FIG. 17, the transceiver may include a receiver and a transmitter, the receiver is configured to perform a receiving function (or operation), and the transmitter is configured to perform a transmitting function (or operation). In addition, the transceiver is configured to communicate with another device/apparatus through a transmission medium.

Optionally, the communication apparatus 170 may further include one or more memories 1730, configured to store program instructions and/or data. The memory 1730 is coupled to the processor 1720. The coupling in this embodiment of this application may be an indirect coupling or a communication connection between apparatuses, units, or modules in electronic, mechanical, or other forms, and is used for information exchange between the apparatuses, the units, or the modules. The processor 1720 may cooperate with the memory 1730. The processor 1720 may execute the program instructions stored in the memory 1730. Optionally, at least one of the one or more memories may be included in the processor.

A specific connection medium between the transceiver 1710, the processor 1720, and the memory 1730 is not limited in this embodiment of this application. In this embodiment of this application, the memory 1730, the processor 1720, and the transceiver 1710 are connected through a bus 1740 in FIG. 17. The bus is represented by using a bold line in FIG. 17. A manner of a connection between other components is merely an example for description, and is not limited thereto. The bus may be classified into an address bus, a data bus, a control bus, and the like. For ease of representation, only one bold line represents the bus in FIG. 17, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor or any conventional processor or the like. The steps of the methods disclosed with reference to embodiments of this application may be directly performed by a hardware processor, or may be performed by using a combination of hardware in the processor and a software module, or the like.

In embodiments of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

For example, the processor 1720 is mainly configured to process a communication protocol and communication data, control the entire communication apparatus, execute a software program, and process data of the software program. The memory 1730 is mainly configured to store a software program and data. The transceiver 1710 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data that is input by a user and output data to the user.

After the communication apparatus is powered on, the processor 1720 may read the software program in the memory 1730, interpret and execute instructions of the software program, and process data of the software program. When data needs to be sent wirelessly, the processor 1720 performs baseband processing on the to-be-sent data, and then outputs a baseband signal to a radio frequency circuit. The radio frequency circuit performs radio frequency processing on the baseband signal, and then sends out a radio frequency signal through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1720. The processor 1720 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus shown in this embodiment of this application may alternatively include more components than those shown in FIG. 17, or the like. This is not limited in this embodiment of this application. The foregoing methods performed by the processor and the transceiver are merely examples. For specific steps performed by the processor and the transceiver, refer to the methods described above.

In another possible implementation, in the communication apparatus shown in FIG. 16, the processing unit 1601 may be one or more logic circuits, and the transceiver unit 1602 may be an input/output interface, or may be referred to as a communication interface, an interface circuit, an interface, or the like. Alternatively, the transceiver unit 1602 may include a sending unit and a receiving unit. The sending unit may be an output interface, and the receiving unit may be an input interface. The sending unit and the receiving unit are integrated into one unit, for example, an input/output interface. As shown in FIG. 18, a communication apparatus shown in FIG. 18 includes a logic circuit 1801 and an interface 1802. In other words, the processing unit 1601 may be implemented by using the logic circuit 1801, and the transceiver unit 1602 may be implemented by using the interface 1802. The logic circuit 1801 may be a chip, a processing circuit, an integrated circuit, a system on chip (system on chip, SoC), or the like. The interface 1802 may be a communication interface, an input/output interface, a pin, or the like. For example, FIG. 18 shows an example in which the communication apparatus is a chip. The chip includes the logic circuit 1801 and the interface 1802.

In this embodiment of this application, the logic circuit and the interface may alternatively be coupled to each other. A specific manner of a connection between the logic circuit and the interface is not limited in this embodiment of this application.

In some embodiments of this application, the communication apparatus may be configured to perform steps, functions, or the like performed by the AP in the foregoing method embodiment.

For example, the logic circuit 1801 is configured to determine a first communication frame; and the interface 1802 is configured to output the first communication frame.

In some other embodiments of this application, the communication apparatus may be configured to perform steps, functions, or the like performed by the STA in the foregoing method embodiment.

For example, the interface 1802 is configured to input a first communication frame; and the logic circuit 1801 is configured to parse the first communication frame.

In still some embodiments of this application, the communication apparatus may be configured to perform steps, functions, or the like performed by the first non-collocated AP MLD in the foregoing method embodiment.

For example, the logic circuit 1801 is configured to generate a BTM request frame; and the interface 1802 is configured to output the BTM request frame.

In still some embodiments of this application, the communication apparatus may be configured to perform steps, functions, or the like performed by the non-AP MLD in the foregoing method embodiment.

For example, the interface 1802 is configured to input a BTM request frame; and the logic circuit 1801 is configured to parse the BTM request frame.

In still some embodiments of this application, the communication apparatus may be configured to perform steps, functions, or the like performed by the AP in the foregoing method embodiment.

For example, the interface 1802 is configured to input a probe request frame, and output a probe response frame.

In still some embodiments of this application, the communication apparatus may be configured to perform steps, functions, or the like performed by the STA in the foregoing method embodiment.

For example, the interface 1802 is configured to output a probe request frame, and input a probe response frame.

In still some embodiments of this application, the communication apparatus may be configured to perform steps, functions, or the like performed by the AP in the foregoing method embodiment.

For example, the logic circuit 1801 is configured to determine a third communication frame; and the interface 1802 is configured to output the third communication frame.

In still some embodiments of this application, the communication apparatus may be configured to perform steps, functions, or the like performed by the STA in the foregoing method embodiment.

For example, the interface 1802 is configured to input a third communication frame; and the logic circuit 1801 is configured to parse the third communication frame.

In some embodiments of this application, the communication apparatus may be configured to perform steps, functions, or the like performed by the AP in the foregoing method embodiment.

For example, the logic circuit 1801 is configured to determine a second communication frame; and the interface 1802 is configured to output the second communication frame.

In some other embodiments of this application, the communication apparatus may be configured to perform steps, functions, or the like performed by the STA in the foregoing method embodiment.

For example, the interface 1802 is configured to input a second communication frame; and the logic circuit 1801 is configured to parse the second communication frame.

It may be understood that specific descriptions of the logic circuit and the interface in this embodiment of this application are merely examples. For specific functions, execution steps, or the like of the logic circuit and the interface, refer to the foregoing method embodiments. Details are not described herein again.

In the foregoing embodiments, for descriptions of the first communication frame, the BTM request frame, the probe request frame, the probe response frame, the third communication frame, the second communication frame, and the like, refer to the descriptions in the foregoing method embodiments. Details are not described herein again.

It may be understood that the communication apparatus shown in this embodiment of this application may implement the methods provided in embodiments of this application in a form of hardware, or may implement the methods provided in embodiments of this application in a form of software. This is not limited in embodiments of this application.

An embodiment of this application further provides a wireless communication system. The wireless communication system includes an AP and a STA, and the AP and the STA may be configured to perform the method according to any one of the foregoing embodiments. Alternatively, the wireless communication system includes a non-collocated AP MLD and a non-AP MLD, and the non-collocated AP MLD and the non-AP MLD may be configured to perform the method according to any one of the foregoing embodiments.

In addition, this application further provides a computer program. The computer program is used to implement an operation and/or processing performed by the AP in the method provided in this application.

This application further provides a computer program. The computer program is used to implement an operation and/or processing performed by the STA in the method provided in this application.

This application further provides a computer-readable storage medium. The computer-readable storage medium stores computer code. When the computer code is run on a computer, the computer is enabled to perform an operation and/or processing performed by the AP in the method provided in this application.

This application further provides a computer-readable storage medium. The computer-readable storage medium stores computer code. When the computer code is run on a computer, the computer is enabled to perform an operation and/or processing performed by the STA in the method provided in this application.

This application further provides a computer program product. The computer program product includes computer code or a computer program. When the computer code or the computer program is run on a computer, an operation and/or processing performed by the AP in the method provided in this application are/is performed.

This application further provides a computer program product. The computer program product includes computer code or a computer program. When the computer code or the computer program is run on a computer, an operation and/or processing performed by the STA in the method provided in this application are/is performed.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one place, or may be distributed on a plurality of network units. Some or all of the units may be selected based on an actual requirement to implement the technical effect of the solutions provided in embodiments of this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multi-link communication method, comprising:
determining a first communication frame, wherein the first communication frame comprises identification information of a first access point multi-link device AP MLD and first indication information, and the first indication information indicates a termination time of the first AP MLD; and
sending the first communication frame.

2. A multi-link communication method, comprising:
receiving a first communication frame, wherein the first communication frame comprises identification information of a first access point multi-link device AP MLD and first indication information, and the first indication information indicates a termination time of the first AP MLD; and
parsing the first communication frame.

3. The method according to claim 1 or 2, wherein the first AP MLD is a non-collocated AP MLD.

4. The method according to claim 1 or 2, wherein the first AP MLD is a collocated AP MLD, and the first communication frame further comprises identification information of a non-collocated AP MLD with which the collocated AP MLD is affiliated.

5. The method according to any one of claims 1 to 4, wherein the first indication information comprises first duration, and the first duration indicates that the first AP MLD is terminated after the first duration.

6. The method according to any one of claims 1 to 5, wherein the identification information of the first AP MLD and the first indication information are comprised in a reconfiguration multi-link element of the first communication frame.

7. The method according to any one of claims 1 to 5, wherein the first communication frame further comprises at least one of the following: indication information indicating a termination reason of the first AP MLD, and one or more neighbor report elements, wherein the one or more neighbor report elements comprise information about a neighboring access point AP of an AP affiliated with the first AP MLD.

8. A multi-link communication method, comprising:
generating, by a first non-collocated AP MLD, a basic service set BSS transition management BTM request frame, wherein the BTM request frame comprises identification information of a second non-collocated AP MLD; and
sending, by the first non-collocated AP MLD, the BTM request frame by using an affiliated AP.

9. A multi-link communication method, wherein the method is applied to a non-access point multi-link device non-AP MLD, and comprises:
receiving a basic service set BSS transition management BTM request frame from an affiliated AP, wherein the affiliated AP is affiliated with a first non-collocated AP MLD, and the BTM request frame comprises identification information of a second non-collocated AP MLD; and
parsing the BTM request frame.

10. The method according to claim 8 or 9, wherein an address information field of the BTM request frame comprises identification information of the first non-collocated AP MLD.

11. The method according to any one of claims 8 to 10, wherein the BTM request frame further comprises at least one of the following: BSS termination included information, link removal information, and link transition information, wherein the BSS termination included information indicates whether a BSS associated with the first non-collocated AP MLD is terminated, the link removal information indicates whether to remove a link associated with the first non-collocated AP MLD, and the link transition information indicates whether to perform transition between different collocated AP MLDs affiliated with the first non-collocated AP MLD.

12. The method according to any one of claims 8, 10, and 11, wherein the method further comprises:
sending a second communication frame, wherein the second communication frame comprises a reduced neighbor report element, and the reduced neighbor report element comprises information about at least one affiliated AP of a collocated AP MLD affiliated with the first non-collocated AP MLD.

13. The method according to any one of claims 9 to 11, wherein the method further comprises:
receiving a second communication frame, wherein the second communication frame comprises a reduced neighbor report element, and the reduced neighbor report element comprises information about at least one affiliated AP of a collocated AP MLD affiliated with the first non-collocated AP MLD.

14. A multi-link communication method, comprising:
receiving a probe request frame, wherein the probe request frame comprises identification information of a first collocated AP MLD and second indication information, the first collocated AP MLD is affiliated with a third non-collocated AP MLD, and the second indication information indicates to probe the first collocated AP MLD, or the second indication information indicates to probe a collocated AP MLD that is affiliated with the third non-collocated AP MLD and that is adjacent to the first collocated AP MLD, or the second indication information indicates to probe the first collocated AP MLD and a collocated AP MLD that is affiliated with the third non-collocated AP MLD and that is adjacent to the first collocated AP MLD, or the second indication information indicates to probe a collocated AP MLD affiliated with the third non-collocated AP MLD; and
sending a probe response frame.

15. A multi-link communication method, comprising:
sending a probe request frame, wherein the probe request frame comprises identification information of a first collocated AP MLD and second indication information, the first AP MLD is affiliated with a third non-collocated AP MLD, and the second indication information indicates to probe the first collocated AP MLD, or the second indication information indicates to probe a collocated AP MLD that is affiliated with the third non-collocated AP MLD and that is adjacent to the first collocated AP MLD, or the second indication information indicates to probe the first collocated AP MLD and a collocated AP MLD that is affiliated with the third non-collocated AP MLD and that is adjacent to the first collocated AP MLD, or the second indication information indicates to probe a collocated AP MLD affiliated with the third non-collocated AP MLD; and
receiving a probe response frame.

16. The method according to claim 14 or 15, wherein when the second indication information indicates to probe a collocated AP MLD affiliated with the third non-collocated AP MLD, the probe response frame comprises third indication information, and the third indication information indicates a quantity of collocated AP MLDs affiliated with the third non-collocated AP MLD.

17. The method according to any one of claims 14 to 16, wherein the probe request frame further comprises identification information of the third non-collocated AP MLD.

18. The method according to any one of claims 14 to 17, wherein the probe request frame further comprises a service set identifier SSID.

19. A multi-link communication method, comprising:
determining a third communication frame, wherein the third communication frame comprises fourth indication information, and the fourth indication information indicates a second collocated AP MLD to be removed from a fourth non-collocated AP MLD, or the fourth indication information indicates a second collocated AP MLD to be transited from a fourth non-collocated AP MLD to a fifth non-collocated AP MLD; and
sending the third communication frame.

20. A multi-link communication method, comprising:
receiving a third communication frame, wherein the third communication frame comprises fourth indication information, and the fourth indication information indicates a second collocated AP MLD to be removed from a fourth non-collocated AP MLD, or the fourth indication information indicates a second collocated AP MLD to be transited from a fourth non-collocated AP MLD to a fifth non-collocated AP MLD; and
parsing the third communication frame.

21. The method according to claim 19 or 20, wherein the third communication frame further comprises fifth indication information, and the fifth indication information indicates a time of removing the second collocated AP MLD from the fourth non-collocated AP MLD, or the fifth indication information indicates a time of transiting the second collocated AP MLD from the fourth non-collocated AP MLD to the fifth non-collocated AP MLD.

22. The method according to claim 21, wherein the fifth indication information comprises second duration, and the second duration indicates that the second collocated AP MLD is removed from the fourth non-collocated AP MLD after the second duration, or the second duration indicates that the second collocated AP MLD is transited from the fourth non-collocated AP MLD to the fifth non-collocated AP MLD after the second duration.

23. The method according to any one of claims 19 to 22, wherein the third communication frame further comprises identification information of the second collocated AP MLD and identification information of the fourth non-collocated AP MLD.

24. A communication apparatus, comprising a unit configured to perform the method according to any one of claims 1 to 23.

25. A communication apparatus, comprising a processor and a memory, wherein
the memory is configured to store instructions; and
the processor is configured to execute the instructions, so that the method according to any one of claims 1 to 23 is performed.

26. A communication apparatus, comprising a logic circuit and an interface, wherein the logic circuit is coupled to the interface; and
the interface is configured to input and/or output code instructions, and the logic circuit is configured to execute the code instructions, so that the method according to any one of claims 1 to 23 is performed.

27. A computer-readable storage medium, wherein the computer-readable storage medium is configured to store a computer program, and when the computer program is executed, the method according to any one of claims 1 to 23 is performed.

28. A computer program, wherein when the computer program is executed, the method according to any one of claims 1 to 23 is performed.

29. A communication system, wherein the communication system comprises a first communication apparatus and a second communication apparatus; and the first communication apparatus is configured to perform the method according to any one of claims 1 and 3 to 7, and the second communication apparatus is configured to perform the method according to any one of claims 2 to 7; or the first communication apparatus is configured to perform the method according to any one of claims 8 and 10 to 12, and the second communication apparatus is configured to perform the method according to any one of claims 9 to 11 and 13; or the first communication apparatus is configured to perform the method according to any one of claims 14 and 16 to 18, and the second communication apparatus is configured to perform the method according to any one of claims 15 to 18; or the first communication apparatus is configured to perform the method according to any one of claims 19 and 21 to 23, and the second communication apparatus is configured to perform the method according to any one of claims 20 to 23.
